# EUROPÄISCHE PATENTSCHRIFT

(11) **EP 1 474 491 B1**
(45) Veröffentlichungstag und Bekanntmachung des Hinweises auf die Patenterteilung: **08.03.2006**
(21) Anmeldenummer: 03702566.5
(22) Anmeldetag: 30.01.2003
(51) Int. Cl.: C09D 201/00, C08L 101/00, C09D 7/12, C08F 290/06

(54) **VERWENDUNG VON ANTI-ADHÄSIVEN VERPACKUNGSMATERIALIEN FÜR DIE VERPACKUNG VON CHEMIKALIEN UND LEBENSMITTELN**
USE OF ANTI-ADHESIVE PACKAGING MATERIALS FOR PACKAGING CHEMICALS AND FOOD
UTILISATION DE MATERIAUX D'EMBALLAGE ANTI-ADHESIFS POUR EMBALLER DES PRODUITS CHIMIQUES ET ALIMENTAIRES

(30) Priorität: 04.02.2002 DE 10204562
(43) Veröffentlichungstag der Anmeldung: 10.11.2004
(73) Patentinhaber: BASF Aktiengesellschaft, 67056 Ludwigshafen (DE)
(72) Erfinder: HARTLEBEN, York, 67159 Friedelsheim (DE); WEISS, Reinhard, 67364 Schwegenheim (DE)
(86) Internationale Anmeldenummer: PCT/EP2003/000922
(87) Internationale Veröffentlichungsnummer: WO 2003/066763

(56) Entgegenhaltungen:
- EP-A- 0 652 248
- EP-A- 0 808 881
- EP-A- 1 193 303
- DE-A- 19 707 786
- US-A- 4 636 552
- US-A- 5 250 614
- US-A- 5 665 822
- US-A- 6 001 947
- US-A- 6 054 534

## Beschreibung

Die vorliegende Erfindung betrifft die Verwendung von anti-adhäsiven Verpackungsmaterialien für die Verpackung von Chemikalien und Lebensmitteln, insbesondere Feinchemikalien wie beispielsweise Vitaminen, Carotinoide, Riech- und Aromastoffe und Pharmachemikalien sowie für Formulierungen und Zubereitungen derselben.

Chemikalien und Lebensmittel werden zu Transport-, Lagerungs- oder Verkaufszwecken in Dosen, Flaschen, Fässer oder andere Gebinde abgefüllt. Diese wurden bislang durch konventionelle Lacke oder andere Beschichtungsverfahren beschichtet, um beispielsweise eine Lebensmittelechtheit zu gewährleisten. Verschiedene Lacksysteme wie beispielsweise Phenolharze, Phenol-Formaldehydharze oder Epoxy-Phenolharze sind dazu im Einsatz. Alternativ kommen auch Beschichtungen mit polymeren Formmassen (z.B. Polyethylen) zum Einsatz.

Anti-adhäsive Eigenschaften von Oberflächen - teils auch als Lotuseffekt bezeichnet - können durch bestimmte anti-adhäsive Lacksysteme erreicht werden (z.B. DE-A-35 35 283, EP-A-0 835 897, JP-1 11 89701, US 5,324,566). Die genannten Lacksysteme weisen jedoch verschiedene Nachteile auf: Sie erfordern z.B. hohe Einsatzkonzentrationen, sind teils nicht hydrolysebeständige oder schlecht handhabbar.

Vorteilhafte neue Additive mit überlegenen anti-adhäsiven Eigenschaften sind in der deutschen Patentanmeldung Anmeldenummer 2 420 767 (Anmeldedatum 29.09.2000) beschrieben. Beschrieben ist u.a. eine Verwendung der additivierten Beschichtungsmittel für Doseninnenbeschichtungen und Fassinnenlackierungen, um eine Restentleerung von entsprechenden ölhaltigen Gebinden zu ermöglichen. Beispielhaft genannt werden Mineralöle und pflanzliche Öle.

Der bevorzugte Anwendungungsbereich aller anti-adhäsiven Lackadditive liegt im technischen Bereich, meist in der Herstellung selbstreinigender Oberflächen oder von Anti-Graffitibeschichtungen etc. Für keines der im Stand der Technik beschriebenen anti-adhäsiven Lackadditive ist eine Verwendung zur Beschichtung von Verpackungsmaterialien für Chemikalien, insbesondere Feinchemikalien - wie beispielsweise Vitamine, Carotinoide, Riech- und Aromastoffe oder Pharmachemikalien - beschrieben.

Ein bestehendes Problem bei der Handhabung von Chemikalien und Lebensmitteln, insbesondere von solchen mit lipophilen Eigenschaften, ist eine effiziente Restentleerung der sie beinhaltenden Gebinde. Aufgrund von Adhäsion an die Gefäßwände kann bei allen bislang benutzen Systemen keine vollständige Entleerung gewährleistet werden, so dass ein Verlust an den wertvollen Verbindungen hingenommen werden muss. Weiterhin können nicht- restentleerte Verpackungen nicht ohne weiteres recycled werden. Die erforderliche Reinigung macht die Wiederverwendung unwirtschaftlich.

Die Aufgabe der vorliegenden Erfindung bestand demnach in der Bereitstellung von Verpackungsmaterialien für Chemikalien und Lebensmittel, bevorzugt lipophile Chemikalien und Feinchemikalien, die eine verbesserte, möglichst vollständige Restentleerung gewährleisten. Ferner stellte sich die Aufgabe, dass die zum Einsatz kommenden Beschichtungsmittel eine gute mechanische Festigkeit als Grundvoraussetzung für eine Lebensmittelechtheit aufweisen.

Überraschenderweise wurde diese Aufgabe gelöst, indem Verpackungsmaterialien verwendet wurden, zu deren Herstellung konventionellen Beschichtungsmitteln oder polymeren Formmassen als anti-adhäsives Additiv ein verzweigtes Polymer zugesetzt wird, das aus einem polymeren Basismolekül und kovalent - gegebenenfalls über einen Spacer - an das Basismolekül gebundenen Polydiorganosiloxanseitenketten besteht (infolge "anti-adhäsives Additiv").

Die für die erfindungsgemäße Verwendung erforderliche äußerst geringe Konzentration des anti-adhäsiven Additives, ermöglicht die Verwendung von bewährten und über lange Jahre geprüften Beschichtungsmitteln und polymeren Formmassen. Die physikalischen Eigenschaften der ursprünglichen Beschichtungsmittel und polymeren Formmassen z.B. in Bezug auf Korrosionsschutz, Glanz- haltung, Witterungsbeständigkeit und Lebensmittelechtheit werden durch die geringen Konzentrationen des anti-adhäsiven Additives nicht negativ beeinflusst.

Ein erster Gegenstand der vorliegenden Erfindung betrifft die Verwendung von Verpackungsmitteln für die Verpackung von Chemikalien und Lebensmitteln ausgenommen mineralische und pflanzliche Öle, wobei die Verpackungsmittel Beschichtungsmittel und/oder polymeren Formmassen enthalten, welche ein verzweigtes polymer ("anti-adhäsives Additiv"), das aus einem polymeren Basismolekül und kovalent - gegebenenfalls über einen Spacer - an das Basismolekül gebundenen Polydiorganosiloxanseitenketten besteht, enthalten. Bevorzugt ist die Verpackung von Feinchemikalien. Am meisten bevorzugt ist die Verpackung von lipophilen Feinchemikalien.

"Lipophile Chemikalie" oder "lipophile Feinchemikalie" umfasst solche Verbindungen, die bei 20°C und Normaldruck eine Wasserlöslichkeit von unter 10 Gewichtsprozent (Gew.-%), bevorzugt unter 5 Gew.-%, besonders bevorzugt unter 3 Gew.-%, am meisten bevorzugt unter 1 Gew.-% haben.

"Feinchemikalien" meint all solche Spezialchemikalien, die eine Weltjahresproduktion von unter 200000 t, bevorzugt unter 100000 t, ganz besonders bevorzugt unter 50000 t, haben. Umfasst sind beispielhaft Vitamine, Fettsäuren, Riech-, Geschmack- und Aromastoffe, Farbstoffe, Pharmachemikalien, Agrochemikalien, Kosmetikchemikalien sowie Vor- und Zwischenprodukte derselben, wie auch Formulierungen und Zubereitungen der vorgenannten.

Feinchemikalien umfasst beispielhaft jedoch nicht einschränkend:
a) Vitamine, insbesondere lipophile Vitamine wie beispielsweise
   - Tocopherolen und Tocotrienolen (im Rahmen dieser Erfindung zusammen auch als Vitamin E bezeichnet) und deren Derivate sowie deren Verbindungen wie beispielsweise Vitamin E Acetat, Vitamin E Succinat oder Vitamin E Nicotinat. Umfasst sind sowohl synthetisch hergestelltes Vitamin E als auch aus natürlichen Quellen gewonnenes und die daraus abgeleiteten Derivate.
   - Vitamin A sowie dessen Derivate wie beispielsweise Retinol (Vitamin A1) und deren Verbindungen wie beispielsweise Ester wie z.B. Acetate, Palmitate und Propionate.
   - Vitamin D und dessen Derivate wie D3 (Cholecalciferol) oder D2 (Ergocalciferol) sowie deren Verbindungen.
   - Vitamin K und dessen Derivate wie beispielsweise Vitamin K1 (Phyllochinon), K2, K3 (Menadion), K4 und K5 sowie deren Verbindungen.
   - Vitamin F und dessen Derivate wie essentielle Fettsäuren (s.u.) sowie deren Verbindungen.
b) Fettsäuren wie beispielsweise gesättigte und ungesättigte Fettsäuren sowie Derivate und Verbindungen derselben, insbesondere
   - polyungesättigte Fettsäuren wie beispielsweise Arachidonsäure, Eicosapentaensäure oder Docosahexaensäure
   - konjugierte mehrfach ungesättigte oder polyungesättigte Fettsäuren wie konjugierte Linolensäuren (CLA; conjugated linoleic acid), α-Parinarsäure (18:4 Octadecatetraensäure), Eleostearinsäure (18:3 Octadecatriensäure), Dimorphecolsäure und Calendulasäure. CLA ist ein Sammelbegriff für positionelle und strukturelle Isomere der Linolensäure, die sich durch ein konjugiertes Doppelbindungssystem beginnend am Kohlenstoffatom 8, 9, 10 oder 11 auszeichnen. Geometrische Isomere existieren für jedes dieser positionellen Isomere, also cis-cis, trans-cis, cis-trans, trans-trans. Vor allem C18:2 cis-9, trans-11 und C18:2 trans-10, cis-12 CLAs, die die biologisch aktivsten Isomere darstellen, sind von besonderem Interesse, da sie sich im Tierexperiment als krebsvorbeugend erwiesen haben, anti-arteriosklerotisch wirken und in Mensch und Tier den Körperfettanteil reduzieren.
c) natürliche und synthetische Geschmacks-, Aroma- und Riechstoffe, insbesondere lipophile Geschmacks-, Aroma- und Riechstoffe, wie beispielsweise Lysmeral, Anisaldehyd, p-Cresolmethylether, Citral, D-Panthenol, Acetoin, iso-Amylacetat, Anisylpropanal, Citronellal, Citronellol, Citronellylacetat, Citronellylnitril, Diacetyl, Dimethylheptanol, Geranonitril, Geranylaceton, Hydroxyciol, Hydroxycitronellal, β-Ionon, Linalylacetat, Phytol, Nerolidol und iso-Veralaldehyd, Linalool, Menthol, Borneon (Kampfer), Pinen, Limonen oder Geraniol sowie Derivate und Verbindungen der vorgenannten.
d) Farbstoffe, insbesondere lipophile Farbstoffe, wie beispielsweise
   - Retinoide (z.B. Vitamin A),
   - Flavonoide (z.B. Quercetin, Rutin, Tangeretin, Nobiletin)
   - Carotinoide (z.B. β-Carotin (Provitamin A), Apo-Carotinal, Lycopin, Astaxanthin)
      sowie Derivate und Verbindungen der vorgenannten.
e) Pharmachemikalien, insbesondere lipophile Pharmachemikalien, sowie deren Derivate, Verbindungen, Vor- oder Zwischen- produkte. Pharmachemikalien meint allgemein all solche Verbindungen, die in einem humanmedizinischen oder tiermedizinischen Arzneimittel eingesetzt werden oder zur Herstellung eines solchen verwendet werden. Beispielsweise jedoch nicht einschränkend seien zu nennen:
   - Anästhetika und Narkotika wie beispielsweise Butanilicain, Fomocain, Isobutamben, Lidocain, Risocain, Prilocain, Pseudococain, Tetracain, Trimecain, Tropacocain und Etomidat;
   - Anticholinergika wie beispielsweise Metixen und Profenamin;
   - Antidepressiva, Psychostimulantie und Neuroleptica wie beispielsweise Alimenazin, Binedalin, Perazin, Chlor- promazin, Fenpentadiol, Fenanisol, Fluanisol, Mebenazin, Methylphenidat, Thioridazin, Toloxaton und Trimipramin;
   - Antiepileptika wie beispielsweise Dimethadion und Nicethamid;
   - Antimycotica wie beispielsweise Butoconazol, Chlorphenesin, Etisazol, Exalamid, Pecilocin und Miconazol;
   - Antiphlogistika wie beispielsweise Butibufen und Ibuprofen;
   - Bronchodilatoren wie beispielsweise Bamifylline;
   - Herzkreislaufmedikamente wie beispielsweise Alprenolol, Butobendin, Cloridazol, Hexobendin, Nicofibrat, Penbutolol, Pirmenol, Prenylamin, Procainamid, Propatylnitrat, Suloctidil, Toliprolol, Xibendol und Viquidil;
   - Zytostatica wie beispielsweise Asperlin, Chlorambucil, Chlornaphazin, Mitotane, Estramustin, Taxol, Penclomedin und Trofosfamid;
   - Hyperemika wie beispielsweise Capsaicin und Methylnicotinat;
   - Lipidsenker wie beispielsweise Nicoclonat, Oxprenolol, Pirifibrat, Simfibrat und Thiadenol;
   - Spasmolytika wie beispielsweise Aminopromazin, Caronerin, Difemerin, Fencarbamid, Tiropramid und Moxaverin;
   - Testosteronderivate wie beispielsweise Testosteronenantat und Testosteron-(4-methylpentanoat);
   - Tranquilizer wie beispielsweise Azaperon und Buramat;
   - Virustatika wie beispielsweise Arildon;
f) Agrochemikalien, insbesondere lipophile Agrochemikalien, wie beispielsweise Insektizide, Pestizide, Nematozide, Rodentizide, Molluskizide, Wachstumsregulatoren und Herbizide sowie deren Derivate, Vor- oder Zwischenprodukte wie z.B. Acephat, Cyfluthrin, Azinphosphomethyl, Cypermethrin, substituierte Phenylthiophosphates, Fenclophos, Permethrine, Piperonal, Tetramethrine und Trifluraline.
g) Kosmetikchemikalien, insbesondere Entschäumer, grenzflächenaktive Verbindungen, d.h. Tenside, Emulgatoren, Schaumbildner und Solubilisatoren, Konservierungsmittel, Parfümöle, Trübungsmittel, Wirkstoffe, UV-Filter, Pflegestoffe wie Panthenol, Collagen, Eiweißhydrolysate, α- und β-Hydroxycarbonsäuren, Eiweißhydrolysate, Stabilisatoren, pH-Wert-Regulatoren, Viskositätsregulierer, Gelbildner, Salze, Feuchthaltemittel, Rückfetter. Ferner umfasst sind anionische, kationische, neutrale oder amphiphile Polymere insbesondere Silikonverbindungen wie z.B. Polyalkylsiloxane, Polyarylsiloxane, Polyarylalkylsiloxane, Polyethersiloxane, Silikonharze oder Dimethicon Copolyole (CTFA) und aminofunktionelle Silikonverbindungen wie Aminodimethicone (CTFA), sowie die davon abgeleitete Co- und Pfropfpolymere. Umfasst sind ferner auch Formulierungen der vorgenannten, wie auch die fertigen Kosmetika, beispielsweise haarkosmetische Formulierungen wie Haarkuren, Mousses, Haargelen oder Haarsprays, Haarlotionen, Haarspülungen, Haarshampoos, Haaremulsionen, Spitzenfluids, Egalisierungsmittel für Dauerwellen, "Hot-Oil-Treatment"- Präparate, Conditioner, Festigerlotionen oder Haarsprays, in Haut- bzw. Körperpflegemitteln, Schaum- und Duschbädern, Mundhygiene- und anderen Hygiene-Formulierungen, Sonnenschutzmittel, Bräunungsmitteln. Insbesondere bevorzugt sind ölige oder ölhaltige Kosmetika wie beispielsweise Pflegelotions oder Ölbäder.

Als lipophile Feinchemikalien am meisten bevorzugt sind Vitamin E und Vitamin A sowie deren Verbindungen wie Vitamin E Acetat, Vitamin A Palmitat oder Vitamin A Propionat.

Unter einer Chemikalie oder Feinchemikalien sind beispielsweise Reinstoffe zu verstehen, wobei der Reinstoff einen Gehalt an der jeweiligen Verbindung von mindestens 95 Gew.-%, bevorzugt mindestens 98 Gew.-%, besonders bevorzugt mindestens 99 Gew.-% hat.

Unter einer Chemikalie oder Feinchemikalie sind ferner auch Mischungen von mindestens zwei einer Chemikalien oder Feinchemikalien oder Mischungen mit anderen Substanzen zu verstehen. Insbesondere bevorzugt sind Mischungen aus mindestens zwei lipophilen Vitaminen oder Mischungen mit anderen Vitaminen, wie beispielsweise hydrophilen Vitaminen. Am meisten bevorzugt sind Vitaminmischungen die mindestens ein Vitamin ausgewählt aus der Gruppe bestehend aus Vitamin A, β-Carotin, Vitamine D3, K1 und Tocopherol enthalten.

Umfasst sind ferner Formulierungen und Zubereitungen einer Chemikalie oder Feinchemikalie. Formulierungen meint beispielsweise Lösungen, Mischungen, Emulsionen oder Dispersionen mit mindestens einem Lösungs- oder Dispergierungsmittel, bevorzugt einem lipophilen Lösungs- oder Dispergierungsmittel. Am meisten bevorzugt sind Lösungen, Mischungen, Emulsionen oder Dispersionen lipophiler Feinchemikalien, insbesondere der lipophilen Vitamine - wie beispielsweise Vitamin E Acetat, Vitamin A Palmitat oder Vitamin A Propionat - in pflanzlichen oder synthetischen Ölen. Pflanzliche Öle umfasst dabei beispielhaft jedoch nicht einschränkend Sonnenblumenöl, Rapsöl, Erdnussöl, Maiskeimöl und Sojaöl. Synthetische öle umfassen insbesondere mittelkettige Triglyceride. Bevorzugt haben die Lösungen, Mischungen, Emulsionen oder Dispersionen einen Gehalt an einer Chemikalie oder Feinchemikalien in einem Bereich von 0,1 bis 99,9 "Gew.-%, bevorzugt 1 bis 98 Gew.-%, besonders bevorzugt 10 bis 95 %, am meisten bevorzugt 30 bis 92 Gew.-%.

Bevorzugt hat die Chemikalie oder Feinchemikalie oder der Formulierung oder Zubereitung derselben einen flüssigen Aggregatzustand. Dieser liegt bevorzugt bereits bei Raumtemperatur (20°C) vor, kann aber auch durch Temperaturerhöhung bis mindestens zum Schmelzpunkt der Chemikalie oder Feinchemikalie oder der Formulierung oder Zubereitung derselben erreicht werden. Dabei wird die Temperatur auf bevorzugt auf höchstens 200°C, besonders bevorzugt auf höchstens 100°C, am meisten bevorzugt auf höchstens 50°C erhöht.

Erfindungsgemäß ist ferner die Verpackung von Lebensmitteln, insbesondere von Lebensmitteln, die lipophil sind oder eine ansonsten hohe Oberflächenadhäsion aufweisen. Beispielhaft jedoch nicht einschränkend seien zu nennen
a) Milch- oder Milchersatzprodukte, wie Milch, Sahne, Joghurt, Quark, Schmand, Sojamilch usw.,
b) Fertigspeisen oder -suppen,
c) Honig oder Sirup,
d) Fruchtsäfte oder Saftkonzentrate,
e) in Öl eingelegten Speisen, wie beispielsweise in Öl eingelegte Gemüse (z.B. Oliven oder Peperoni), Käse (z.B. Schafskäse) oder Fischprodukte (z.B. Sardinen oder Anchovis).

Die in der Verpackungsmitteln zum Einsatz kommenden Beschichtungsmittel und polymeren Formmassen enthalten dabei bezogen auf den Feststoffgehalt des Beschichtungsmittels bzw. bezogen auf das Gesamtgewicht der polymeren Formmasse als anti-adhäsives Additiv 0,1 bis 10 Gew.-% eines verzweigten Polymers, welches ein Gewichtsmittel des Molekulargewichts von 2000 bis 200000 g besitzt und aus einem polymeren Basismolekül sowie über Si-C-Bindungen - gegebenenfalls über einen Spacer - kovalent an das Basismolekül gebundenen Polydiorganosiloxanseitenketten, die ein Gewichtsmittel des Molekulargewichts zwischen 1000 und 30000 g aufweisen und deren Anteil am Gesamtgewicht des verzweigten Polymers 5 bis 25 Gew.-% beträgt, besteht.

Das polymere Basismolekül des verzweigten Polymers, das den Beschichtungsmitteln und polymeren Formmassen als anti-adhäsives Additiv zugesetzt wird, ist bevorzugt ein Polymer aus radikalischer Polymerisation, ein Polykondensat oder ein Polyaddukt und kann als Copolymer auch aus strukturell verschiedenen monomeren Einheiten aufgebaut sein.

Wenn das polymere Basismolekül ein Polymer aus radikalischer Polymerisation ist, dann können als monomere Einheiten des Basismolekül alle radikalisch polymerisierbaren, ethylenisch ungesättigten Verbindungen verwendet werden. Bevorzugt sind dies Verbindungen, die eine (Meth)acryl-, eine Styryl-, eine Allyl-, eine Vinylbenzyl-, eine Vinylether-, eine Vinylester- oder eine Vinylketongruppe aufweisen.

Besonders bevorzugte monomere Einheiten des Basismoleküls bei radikalischer Polymerisation sind ausgewählt aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Acrylsäureamiden und Methacrylsäureamiden von geradkettigen, verzweigten oder cycloaliphatischen Aminen mit 1 bis 22 C-Atomen, Aminoalkylacrylaten und Aminoalkylmethacrylaten von geradkettigen, verzweigten oder cycloaliphatischen Aminoalkoholen mit 2 bis 8 C-Atomen, Maleinsäureestern, Itaconsäureestern und Fumarsäureestern von geradkettigen, verzweigten oder cycloaliphatischen Alkoholen mit 1 bis 22 C-Atomen, Vinylestern, Vinylethern und Vinylketonen mit 3 bis 20 C-Atomen, Vinyltrialkoxysilanen mit 5 bis 8 C-Atomen, und Methacryloxypropyltrialkoxysilanen mit 10 bis 16 C-Atomen.

Wenn das polymere Basismolekül ein Polykondensat ist, so können als monomere Einheiten des Basismoleküls alle Verbindungen verwendet werden, die zu einem Polymer kondensiert werden können. Bevorzugt können hierzu als Alkoholkomponenten Ethylenglykol, Propylenglykol, Dipropylenglykol, 1,4-Butandiol, 1,6-Hexandiol, 2-Ethylhexan-1,3-diol, Neopentylglykol, Glycerin, Trimethylolpropan, Pentaerythrit und Dipentaerythrit verwendet werden. Bevorzugt können hierzu als Säurekomponenten Phthalsäure, Phthalsäureanhydrid, Isophthalsäure, Terephthalsäure, Tetrahydrophthalsäure, Tetrahydrophthalsäureanhydrid, Adipinsäure, Sebacinsäure, Maleinsäure, Maleinsäureanhydrid, Fumarsäure, Trimellitsäure, Trimellitsäureanhydrid, Pyromellitsäure und Pyromellitsäuredianhydrid verwendet werden. Weiterhin bevorzugt sind Caprolacton und Valerolacton und deren Derivate, sowie β-Propiolacton und Dodecalacton.

Wenn das polymere Basismolekül ein Polyaddukt ist, so können als monomere Einheiten des Basismoleküls alle Verbindungen verwendet werden, die durch Polyaddition miteinander verknüpft werden können. Als Polyaddukte werden bevorzugt Polyaddukte aus Diolen mit 2 bis 80 C-Atomen und Diisocyanate, Triisocyanate oder Polyisocyanate verwendet. Alle konventionellen aromatischen, aliphatischen, cycloaliphatischen di-, tri- und polyfunktionellen Isocyanate können verwendet werden. Bevorzugt verwendete Diisocyanate sind 1,6-Hexamethylendiisocyanat, Isophorondiisocyanat, 4,4'-Biphenylendiisocyanat, Toluylendiisocyanat, 4,4'-Methylendicyclohexyldiisocyanat, 1,4-Diisocyanato-butan, Diphenylmethandiisocyanat usw.. Bevorzugt verwendete Triisocyanate sind Triphenylmethantriisocyanat, 2,4,5-Toluoltriisocyanat, sowie die Trimere von Diisocyanaten z.B. von 1,6-Hexamethylendiisocyanat und Isophorondiisocyanat. Polyisocyanate wie z.B. Polymethylenpolyphenylisocyanat (PAPI) und Isocyanurate (z.B. die Trimere bzw. Polymere von Hexamethylendiisocyanat und Isophorondiisocyanat) können auch verwendet werden.

Als monomere Einheiten des Basismoleküls können auch Polyethylenglykol-haltige monomere Einheiten verwendet werden, um eine Wasserlöslichkeit bzw. Wasseremulgierbarkeit der verzweigten Polymere zu ermöglichen. Im Falle einer radikalischen Polymerisation des Basismoleküls können als Polyethylenglykol-haltige monomere Einheiten beispielsweise Polyethylenglykolmonoacrylate oder Polyethylenglykolmonomethacrylate mit 5 bis 80 C-Atomen verwendet werden. Solche Produkte sind besonders für wässrige Lacksysteme geeignet.

Des weiteren können monomere Einheiten mit funktionellen Gruppen verwendet werden, um eine spätere Einbindung in die jeweilige polymere Matrix oder das Bindemittel zu ermöglichen. Im Falle einer radikalischen Polymerisation des Basismoleküls können als monomere Einheiten mit funktionellen Gruppen beispielsweise Acrylnitril, Acrylsäure, Methacrylsäure, Hydroxyalkylacrylate oder Hydroxyalkylmethacrylaten von geradkettigen, verzweigten oder cycloaliphatischen Diolen mit 2 bis 36 C-Atomen, Epoxyalkylacrylate oder Epoxyalkylmethacrylate von geradkettigen, verzweigten oder cycloaliphatischen Hydroxyepoxiden mit 3 bis 6 C-Atomen, oder aber Vinyltrialkoxysilane mit 5 bis 8 C-Atomen verwendet werden. Auch ethylenisch ungesättigte Verbindungen enthaltend eine Isocyanatgruppe, wie beispielsweise Isocyanatomethylmethacrylat oder Isopropenylcumylisocyanat, können bei einer radikalischen Polymerisation des Basismoleküls verwendet werden.

Um die Oberflächenspannung der Polydiorganosiloxanseitenkeitenenthaltenden verzweigten Polymere stark zu erniedrigen, ist es vorteilhaft, geringe Mengen an monomeren Einheiten mit Perfluoralkylgruppen mit einzupolymerisieren. Im Falle einer radikalischen Polymerisation des Basismoleküls können als monomere Einheiten mit Perfluoralkylgruppen beispielsweise Perfluoralkylacrylate oder Perfluormethacrylate mit 6 bis 20 C-Atomen verwendet werden.

Um eine ausreichende Verträglichkeit der Polydiorganosiloxanseitenketten-haltigen verzweigten Polymere mit den Beschichtungsmitteln bzw. den polymeren Formmassen zu gewährleisten, ist es sinnvoll, Hydroxy- und Säurefunktionalität in das verzweigte Polymer einzubauen. Bevorzugt sind verzweigte Polymere mit einer OH-Zahl zwischen 70 und 150 mg KOH/g und einer Säurezahl zwischen 0,5 und 30 mg KOH/g. Auch der Einbau von Polyestern in Form Caprolacton und/oder Valerolacton-modifizierter monomerer Einheiten in das polymere Basismolekül ist möglich. Bei radikalischer Polymerisation des Basismoleküls sind hier Caprolacton- und/oder Valerolacton-modifizierte Hydroxyalkylacrylate und Caprolacton und/oder Valerolacton-modifizierte Hydroxyalkylmethacrylate mit einem mittleren Molekulargewicht von 220 bis 1200 g bevorzugt, wobei die Hydroxyalkylacrylate und die Hydroxyalkylmethacrylate bevorzugt von geradkettigen, verzweigten oder cycloaliphatischen Diolen mit 2 bis 8 C-Atomen abgeleitet sind.

Ganz besonders bevorzugte monomere Einheiten des Basismoleküls bei radikalischer Polymerisation sind ausgewählt aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexylacrylat, 2-Ethylhexylmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Glycidoxipropylacrylat, Glycidoxipropylmethacrylat, Vinyltriethoxysilan, Methacryloxypropyltrimethoxysilan, Isocyanatomethylmethacrylat, Isopropenylcumylisocyanat, Styrol, α-Methylstyrol, Acrylnitril, Triethylenglycolmonoacrylat, Triethylenglycolmonomethacrylat, Ethylvinylether, Butylvinylether, Cyclohexylvinylether, Vinylacetat, N,N-Dimethylaminoethylacrylat, N,N-Dimethylaminoethylmethacrylat, N,N-Dimethylaminopropylacrylat, N,N-Dimethylaminopropylmethacrylat, Polyethylenglykolmonoacrylat, Polyethylenglykolmonomethacrylat sowie Caprolacton- und/oder Valerolacton-modifiziertes Hydroxyethylacrylat und Caprolacton- und/oder Valerolacton-modifiziertes Hydroxyethylmethacrylat mit einem mittleren Molekulargewicht zwischen 220 bis 1200 g.

Die Polydiorganosiloxanseitenketten in den verzweigten Polymeren, die den Beschichtungsmitteln und polymeren Formmassen zugesetzt werden, weisen ein Gewichtsmittel des Molekulargewichtes von 1000 bis 30000 auf und sind über eine Si-C-Bindung - gegebenenfalls über einen Spacer - an das polymere Basismolekül gebunden. Wenn das Basismolekül ein Polymer aus radikalischer Polymerisation ist, so können die Polydiorganosiloxanseitenketten in Form von monoethylenisch ungesättigten Polydiorganosiloxanen (= Polydiorganosiloxanmakromonomere) mit einpolymerisiert werden. Als monoethylenisch ungesättigte Polydiorganosiloxane können z.B. Polydiorganosiloxanmono(meth)acrylate, Polydiorganosiloxanmonoalkene usw. verwendet werden. Wenn das Basismolekül ein Polykondensat oder Polyaddukt ist, so können die Polydiorganosiloxangruppen zum Beispiel in Form von Polydiorganosiloxanmonoolen einpolymerisiert werden.

Der Begriff des "Spacer" meint, dass das Si-Atom der Polydiorganosiloxanseitenkette nicht unbedingt direkt mit einem C-Atom des polymere Basismoleküls verknüpft sein muss (wie in Form A, s.u.), sondern, dass auch weitere Molekülbausteine wie beispielsweise in den Formen B und C verdeutlicht, zwischen dem Si-Atom der Polydiorganosiloxanseitenkette und einem C-Atom des polymere Basismoleküls lokalisiert sein können. Dabei ist - wie in Form B und C - die Polydiorganosiloxanseitenkette bevorzugt über eine Si-C Bindung mit dem Spacer verknüpft.

Ein Beispiel für ein monoethylenisch ungesättigtes Polydiorganosiloxanmakromonomer, mit dessen Hilfe eine Polydimethylsiloxanseitenkette in das Polymer einpolymerisiert werden kann, ist etwa α-Butyldimethylsiloxy-ω-(3-methacryloxypropyl)-polydimethylsiloxan:

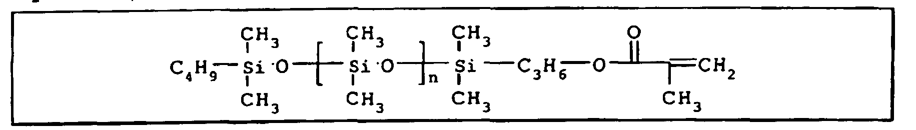

Weitere Beispiele für Polydimethylsiloxanseitenketten, die als Polydimethysiloxanmakromonomere in das polymere Basismolekül einpolymerisiert werden können, finden sich z.B. in der Veröffentlichung von Koichi Ito (1998) *"Polymeric Design by Macromonomer Technique",* Prog Polym Sci 23:607ff. Hier ist auch die Herstellung dieser nur an einem Kettenende modifizierten Polydimethylsiloxane beschrieben.

Grundsätzlich können die Polydiorganosiloxanseitenketten jedoch auch durch Reaktion des polymeren Basismoleküls mit einem einseitig endständigen hydroxyfunktionellen Polydiorganosiloxan mit dem Basismolekül verknüpft werden. Auch andere einseitig endständig modifizierten Polydiorganosiloxane, wie z.B. endständig epoxymodifizierte Polydiorganosiloxane, können eingesetzt werden. Voraussetzung hierfür ist allerdings, dass das Basismolekül entsprechende funktionelle Gruppen, wie etwa Hydroxygruppen oder Carboxylgruppen, aufweist. So können in einer weiteren Ausführungsform die Polydiorganosiloxanseitenketten in Form eines Monoisocyanatadduktes an das polymere Basismolekül gebunden sein.

Ein Beispiel für ein endständig einseitig hydroxyfunktionelles Polydimethylsiloxan, mit dessen Hilfe durch Reaktion mit dem polymeren Basismoleküls eine Polydimethylsiloxanseitenkette in das Polymer eingebaut werden kann, ist z.B. α-Butyldimethylsiloxy-ω-(3-(2-hydroxyethoxy)propyl))-polydimethylsiloxan

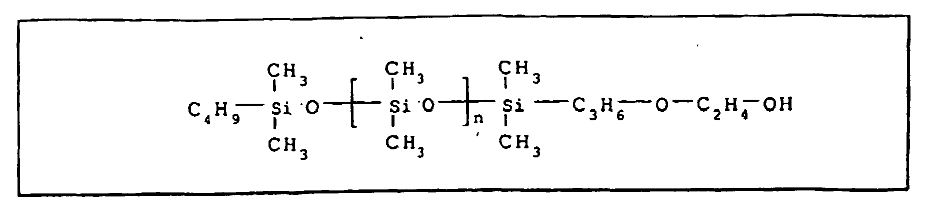

Des Weiteren ist es möglich, die verzweigten Polymere z.B. durch Umesterung von esterhaltigen Polymeren mit einseitig endständig hydroxyfunktionellen Polydiorganosiloxanen zu erhalten. Hierbei können auch Mischungen von einseitig endständig hydroxyfunktionellen Polydiorganosiloxanen unterschiedlicher Kettenlängen eingesetzt werden. Auch die Umsetzung von epoxyfunktionellen oder isocyanatfunktionellen Polymeren mit einseitig endständig hydroxyfunktionellen und carboxyfunktionellen Polydiorganosiloxanen ist möglich.

Die Herstellung der verzweigten Polymere ist auch durch die lebende radikalische Polymerisation und die "Group Transfer Polymerization" möglich.

Das Gewichtsmittel des Molekulargewichtes der Polydiorganosiloxanseitenketten liegt zwischen 1000 und 30000 g, bevorzugt zwischen 3000 und 10000 g. Der Anteil der Polydiorganosiloxanseitenketten in den verzweigten Polymeren beträgt zwischen 5 und 25 Gew.-%, oder zwischen 5 bis 20 Gew.-%, bevorzugt zwischen 7,5 und 12,5 Gew.-%. Es können zur Herstellung der verzweigten Polymere Polydiorganosiloxanseitenketten gleicher Kettenlänge verwendet werden oder Mischungen von Polydiorganosiloxanseitenketten unterschiedlicher Kettenlänge.

Die Bindung der Polydiorganosiloxanseitenketten erfolgt bevorzugt über eine Struktur, die ausgewählt ist aus den nachfolgenden Strukturen A bis C 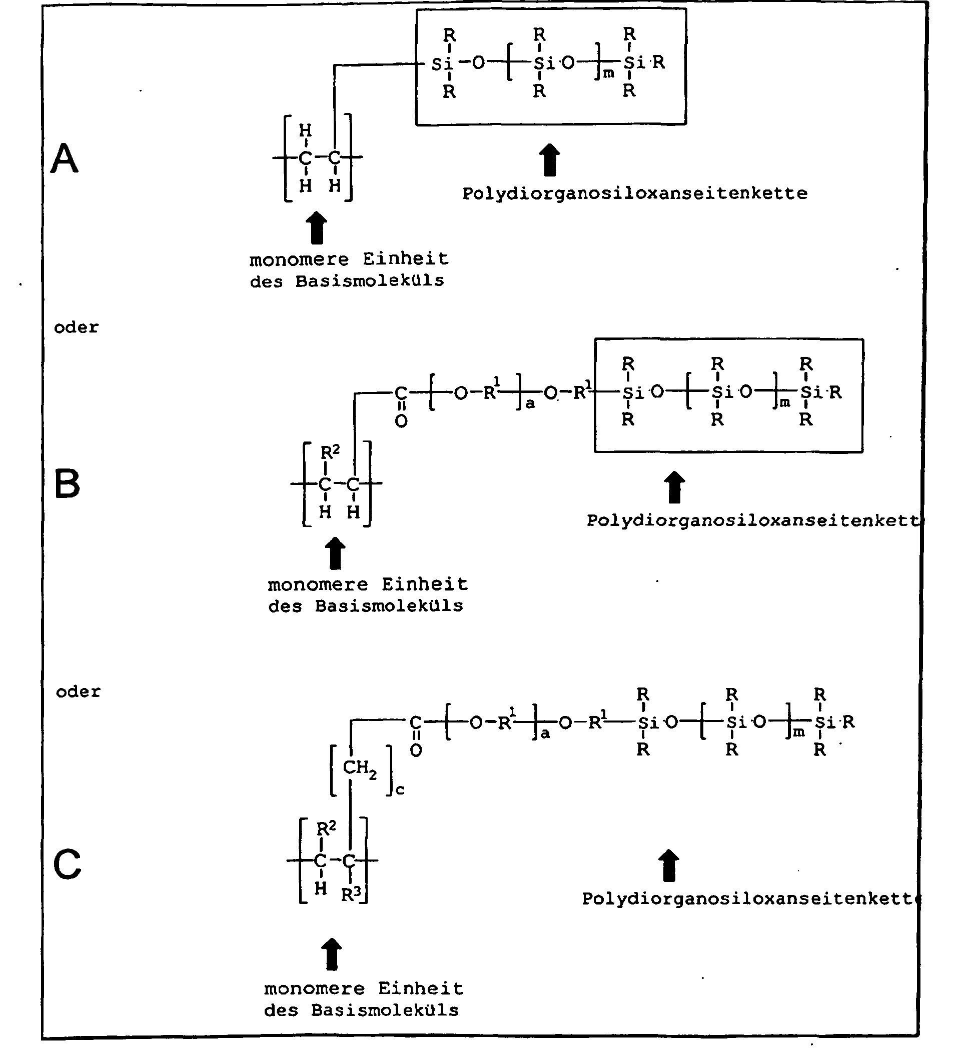 in denen
die Reste R einem geradkettigen Alkylrest mit 1 bis 8 C-Atomen oder einem Perfluoralkylrest mit 3 bis 10 C-Atomen entsprechen, wobei die Reste R innerhalb einer Polydiorganosiloxanseitenkette gleich oder verschieden sein können,
die Reste R¹ einem geradkettigen oder verzweigten Alkylenrest mit 2 bis 8 C Atomen entsprechen,
der Rest R² einem wasserstoffatom oder einem Rest -COOR' entspricht, wobei der Rest R' ein Wasserstoffatom oder einen gesättigten oder ungesättigten, geradkettigen, verzweigten oder cycloaliphatischen Alkylrest mit 1 bis 22 C-Atomen darstellt,
der Rest R³, wenn c gleich 1 ist, einem Rest -COOR' entspricht und, wenn c gleich 0 ist, einem Rest -(CH2)-COOR' oder einer Methylgruppe entspricht, wobei der Rest R' wie zuvor definiert ist,
der Koeffizient a einen Wert von 0 bis 10, bevorzugt 0 bis 5, annehmen kann, und in denen
m so gewählt ist, dass das Molekulargewicht der Polydiorganosiloxanseitenketten zwischen 1000 und 30000 g liegt.

Die Gewichtsmittel des Molekulargewichts der verzweigten Polymere liegen im Bereich von 2000 bis 200000 g, oder von 5000 bis 75000 g, bevorzugt von 5000 bis 7000 g, besonders bevorzugt im Bereich von 10000 bis 50000 g.

Ganz besonders bevorzugt wird als verzweigtes Polymer das Additiv Silclean® 3700 (Byk-Chemie GmbH, Wesel, Deutschland) eingesetzt.

Die Herstellung der polymeren Basismoleküle erfolgt in der dem Fachmann bekannten Weise. Im Falle der radikalischen Polymerisation des Basismoleküls erfolgt die Herstellung z.B. mittels Peroxiden oder Azoverbindungen als Radikalbildner (radikalische Polymerisationsinitiatoren; infolge auch Initiatoren) in organischen Lösemitteln oder in Masse. Als Lösemittel kommen Ester, wie z.B. Ethylacetat, n-Butylacetat oder 1-Methoxy-2-propylacetat, sowie aromatische Lösemittel, wie z.B. Toluol oder Xylol oder aber Ketone, wie z.B. Methylisobutylketon oder Methylethylketon in Frage. Die Wahl des Lösemittels richtet sich nach dem späteren Einsatzzweck des verzweigten Polymeren. Bevorzugt werden niedrigsiedende Lösemittel eingesetzt, um das Abdestillieren dieser Lösemittel im Falle einer möglichen Verwendung des verzweigten Polymers in reiner Form zu ermöglichen.

Als radikalische Polymerisationsinitiatoren kommen alle diejenigen in Betracht, die in der Lage sind, eine radikalische Polymerisation auszulösen. Es kann sich dabei sowohl um Peroxide, Hydroperoxide, z.B. Alkalimetallperoxodisulfate als auch um Azoverbindungen handeln. Auch werden kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure, Wasserstoffperoxid mit Ascorbinsäure oder Natriumperoxodisulfat mit Natriumdisulfit. Geeignete Initiatoren sind ferner die Ammonium- oder Alkalimetallsalze von Peroxosulfaten oder Peroxodisulfaten, insbesondere Natrium- oder Kaliumperoxodisulfat. Es können aber auch Azo-Verbindungen, wie z.B. A-zoisobutyronitril (AIBN), eingesetzt werden. Als Initiatoren bevorzugt sind Peroxide, wie z.B. tert.-Butylperoxobenzoat oder Dibenzoylperoxid.

Die Polymerisation wird bei Temperaturen von ca. 40°C bis 180°C, bevorzugt bei 100°C bis 150°C, besonders bevorzugt bei 110°C bis 130°C durchgeführt.

Die Polymerisation oder Polyaddition kann in Gegenwart weiterer Hilfsstoffe (s.u.) durchgeführt werden.

Die verzweigten Polymere können durch polymeranaloge Reaktion noch nachträglich modifiziert werden. Z.B. kann durch die Reaktion eines verzweigten Polymers, das hydroxyfunktionelle monomere Einheiten im Basismolekül enthält, mit Maleinsäureanhydrid eine reaktive Doppelbindung und Säurefunktion mit eingebaut werden. Weitere geeignete Anhydride zur Einführung der Säurefunktion sind z.B. Bernsteinsäureanhydrid, Phthalsäureanhydrid und Trimellitsäureahydrid, wobei hydroxyfunktionelle monomere Einheiten innerhalb eines verzweigten Polymers auch mit strukturell verschiedenen Anhydriden verestert werden können. Ferner können im polymeren Basismolekül vorhandene funktionelle Hydroxylgruppen verestert sein mit einer Verbindung ausgewählt aus der Gruppe bestehend aus Maleinsäureanhydrid, Bernsteinsäureanhydrid, Phthalsäureanhydrid, Trimellitsäureanhydrid, Acrylsäure und Methacrylsäure. Die Säurefunktion kann zur besseren Wasserlöslichkeit z.B. mit Alkanolaminen auch versalzt werden. Weiterhin können durch nachträgliche Acrylierung und/oder Methacrylierung an der Hydroxygruppe Produkte erhalten werden, die sich auch bei strahlenhärtenden Prozessen, wie UV- und Elektronenstrahlhärtung, fest in Lacksysteme einbauen lassen.

Die anti-adhäsiven Additive können in Beschichtungsmittel und/oder Formmassen eingearbeitet werden, die sich zur Herstellung von Verpackungsmitteln eignen. Bevorzugt werden diese zur Herstellung von Innenbeschichtungen von Verpackungsmitteln, wie beispielsweise Doseninnenbeschichtungen oder Fassinnenlackierungen eingesetzt.

"Verpackungsmittel" meint allgemein all solche Behältnisse, die sich beispielsweise zur Verpackung, Lagerung oder Transport eignen. Beispielhaft jedoch nicht einschränkend seien Fässer, Kanister, Dosen, Flaschen, Tuben, Container, Kisten, Beutel oder Säcke zu nennen. Als Materialien der Verpackungsmittel sind alle denkbar, die sich für die Herstellung von Verpackungsmaterialien eignen, wie beispielsweise Metalle, Glas, Holz, Papier, Textilien, Leder, Kunststoffe und Keramik. Bevorzugt sind Metalle und Kunststoffe. Bevorzugte Metalle sind Stahl- oder Aluminiumlegierungen. Die Verpackungsmittel können unterschiedliche Volumina umfassen. Umfasst sind beispielsweise Verpackungsmittel mit Volumina von bis zu 1 1, bevorzugt bis zu 10 1, besonders bevorzugt bis zu 100 1, am meisten bevorzugt bis 1000 1.

Die unter Verwendung der anti-adhäsiven Additive additivierten Formmassen eignen sich ferner für die Innenbeschichtung von Verpackungsmitteln, beispielsweise für Doseninnenbeschichtungen und Fassinnenlackierungen.

Beschichtungsmittel umfasst allgemein all solche Mittel, die für eine Beschichtung der für die Herstellung von Verpackungsmittel verwendeten Materialien geeignet sind.

Die unter Verwendung der anti-adhäsiven Additive additivierten Beschichtungsmittel eignen sich bevorzugt für die Innenbeschichtung von Verpackungsmitteln, beispielsweise für Doseninnenbeschichtungen und Fassinnenlackierungen. Bedingt durch die hervorragende Verträglichkeit der verzweigten Polymere sind diese auch hervorragend zur Herstellung transparenter Beschichtungen geeignet.

Insbesondere sind Lacksysteme als Beschichtungsmittel geeignet. Verschiedene Lacksysteme zur Beschichtung von Verpackungsmaterialien sind dem Fachmann bekannt.

Die Beschichtungsmittel enthalten neben dem anti-adhäsiven Additiv bevorzugt mindestens ein Bindemittel, sowie gegebenenfalls weitere Komponenten wie Pigmente, Füllstoffe und übliche Hilfsstoffe (s.u.). Beschichtungsmittel werden meist durch den oder die enthaltenen Bindemittel (Filmbildner) charakterisiert. Bindemittel meint Makromolekulare oder Makromoleküle bildende Stoffe, welche für die Filmbildung zuständig sind. Geeignet sind z.B. 2-Komponenten-Reaktionslacke, luftrocknende Lacke, feuchtigkeitshärtende Lacke, säurehärtende Lacke, strahlenhärtende Lacke, Dispersionslacke oder Einbrennlacke.

Beispielhaft seien zu nennen Vinylesterharzen, Polyethylen, Polyamiden, Polyacrylnitril, Chlorkautschuk, Alkydharze, Polyesterharzen, Polyurethanharzen, ungesättigte Polyesterharzen, Polyester/Polyisocyanat-Kombinationen (2-komponentig), Polyesteracrylate (strahlungshärtbar), Acrylharze, Celluloseacetat (Essigsäureester der Cellulose), Celluloseacetobutyrat (Essigsäure/Buttersäureester der Cellulose), Celluloseacetopropionat (Essigsäure/Propionsäureester der Cellulose), Cellulosenitrat (Salpetersäureester der Cellulose), Chlorsulfoniertes Polyethylen, Epoxidharze, Epoxidharzester, Epoxidharz-Teer-Kombinationen, Ethylen-Vinylacetat-Polymere, Melamin-Formaldehyd-Harze, Chloriertes Polyethylen, Phenol-Formaldehyd-Harze, Polymethylmethacrylat (Polymethacrylsäuremethylester), Polypropylen, Polystyrol, Polytetrafluorethylen, Polyurethane, Polyurethan-Teer-Kombinationen, Polyvinylacetat, Polyvinylbutyral, Polyvinylchlorid, Chloriertes Polyvinylchlorid, Polyvinylidenchlorid, Polyvinylidenfluorid, Polyvinylfluorid, Chlorkautschuk, Cyclokautschuk, Polystyrol, Polystyrol mit Elastomer auf Basis Butadien, Silicon-Polymere, gesättigter Polyester, Harnstoff-Formaldehyd-Harze, ungesättigte Polyester, Vinylchlorid-Vinylacetat-Polymere, Polybutadien, usw.. sowie Mischungen der vorgenannten.

Verschiedene bevorzugte Lacksysteme umfassen beispielsweise Systeme auf der Basis von Epoxyphenolharzen, Alkydharzen, Melaminharzen, Alkyd/Melaminharzen, Phenolharzen, Phenoxyphenolharzen oder Phenol/Formaldehydharzen. Ferner geeignet sind Acryllacke oder 2-Komponenten-Epoxidharzlacke.

Beispielsweise können die in den Bindemitteln enthaltenen Polymerisate aus Monomeren aufgebaut sein wie Vinylether von C₃-C₁₀₋Alkanolen, verzweigte und unverzweigte C₃-C₁₀-Olefine, C₁-C₁₀₋Alkylacrylate, C₅-C₁₀-Alkylmethacrylate, C₅-C₁₀₋Cycloalkyl(meth)acrylate, C₁-C₁₀-Dialkylmaleinate und/oder C₁-C₁₀₋Dialkylfumarate. Insbesonders bevorzugt sind Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat, Di-n-butylmaleinat und/oder Di-n-butylfumarat. Weiterhin geeignete Monomere sind vinylaromatische Monomere und/oder a,b-ungesättigte Carbonsäurenitrile oder Carbonsäuredinitrile. Unter vinylaromatischen Monomeren versteht man insbesondere Derivate des Styrols oder des a-Methylstyrols, in denen die Phenylkerne gegebenenfalls durch 1, 2 oder 3 C₁-C₄₋Alkylgruppen, Chlor und/oder Methoxygruppen substituiert sind. Besonders bevorzugte Monomere sind Styrol, a-Methylstyrol, o- oder p-Vinyltoluol, Acrylnitril, Methacrylnitril, Maleinsäuredinitril, Fumarsäuredinitril oder deren Mischungen.

Weiterhin können in den Bindemitteln auch vernetzend wirkende Monomere mit wenigstens zwei nichtkonjugierten ethylenisch ungesättigten Dopppelbindungen vorhanden sein. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Diester zweiwertiger Alkohole mit α,β-monoethylenisch ungesättigten Monocarbonsäuren unter denen Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat.

Die Beschichtungsmittel können in verschiedenen Darreichungsformen vorliegen, beispielsweise als Pulverlack oder High Solid-Lack. festkörperreicher Lacke, Wasserlacke, strahlenhärtender Systeme.

Bevorzugt sind Systeme, die von sich aus hydrophobe Eigenschaften haben. Am meisten bevorzugt sind Systeme, die dem deutschen (BGA) oder US-amerikanischen (FDA) Lebensmittelgesetz entsprechen.

Besonders bevorzugt sind beispielsweise isocyanatvernetzende 2-Komponentensysteme (vgl. Beispiel 11.1) oder Einbrennlacke wie beispielsweise Acrylat/Melamin-Einbrennlacke (vgl. Beispiel 11.2) oder Epoxid/Phenolharz-Einbrennlacke (vgl. Beispiel 11.3).

Beispielhaft jedoch nicht einschränkend können nachfolgende Lacke als Basislack für die anti-adhäsiven Additive zum Einsatz kommen:

| **Bezeichnung** | **Hersteller** | **Farbton** | **Art.Nr.** | **Bindemittel** |
|---|---|---|---|---|
| Fassinnenlack (R78433) | DuPont | Braun | 3208909100 | Phenoharzl/Epoxi-Kombi |
| Einbrenn-Fassaußenlack | DuPont | farblos, glänzend | 380620101 | Alkyd-Melaminharzkombi |
| Fassinnenlack | DuPont | Gold | 379370101 | Phenolharz |
| Primer | DuPont | goldbraun | 379930101 | Epoxi-/Phenolharz-Kombi |
| Fassinnenlack | DuPont | Rotbraun | 379380101 | Phenolharz |
| Protefan Einbrennlack 10-1 VS konz. FP>21°C | Goldschmidt | Grau, n.EB: O-liv | '00203101 | Phenolharz |
| Protefan Einbrennlack 10-1 VS konz.Oliv | Goldschmidt | Grau, n.EB: O-liv | '00203131 | Phenolharz |
| Fassinnenschutzlack | Grace | Gold | DC 1002-01 | Epoxi-Phenol-Kombi |
| Grundlack N 48235 | ICI | farblos | 7011520 | Epoxi, mod. |
| InnenschutzlackT 1/N 47929 | ICI | Gold | 7010745 | Phenolharz-Kombi |
| L-1 Clear Phenolic Hi Bake Concentrate | KNS | Dark Amber | #114-1X | Phenolharz |
| L-15 Dark Brown Pheno-lic/Epoxy HiBake Ready-to-Spray | KNS | Dark Brown | #407-8B-N53 | Phenol-Epoxi-Harz |
| L-35 Dark Buff Epoxy/ Phenolic HiBake Concentrate | KNS | Dark Buff | #409-3H-J14 | Epoxi-Phenolharz |
| L-5X Olive Drab Phenolic HiImpact HiBake Concentrate | KNS | Olive Drab | #404-5-D84 | Phenolharz |
| L-5X Tan Phenolic Hilmpact HiBake Concentrate | KNS | Tan | #404-5-S83 | Phenolharz |
| L-40 X Clear Epoxy Modified LoVoc LoCure "Prime Flex" Ready-to-Spray | KNS | Water White | # 119-PF-D99 | Epoxy, mod. |
| WL-105755 Haftgrund | Rembrandtin | beige | 210088 | Epoxi(MG>700) |
| WL-107031 Innenschutzlack | Rembrandtin | beige | 210094 | Epoxid(MG>700)/ Phenolharz |
| WL-105731 Innenschutzlack | Rembrandtin | Gelb | 210092 | Epoxid(MG>700)/ Phenolharz |
| W1-105701 Walzgrund | Rembrandtin | Gold | 210090 | Epoxid(MG>700) |
| WL-105700 Innenschutzlack | Rembrandtin | Goldlack | 210097 | Epoxid(MG>700)/ Phenolharz |
| WL-107910 Innenschutzlack | Rembrandtin | Goldlack | 210096 | Epoxid(MG>700)/ Phenolharz |
| WL-106193 Walzgrund | Rembrandtin | Grau ca. RAL 7035 | 210089 | Alkyd" OH-haltig |
| WL-105720 Innenschutzlack | Rembrandtin | Rotbraun | 210091 | Phenolharz, mod, |
| Innenschutzlack RDL 16 (Z3) | Van Leer | Gold transparent | RDL16S00VRE | Phenolharz |
| Innenschutzlack RDL 50 (Z42) | Van Leer | Grau, n.EB: O-liv | RDL5OSO0VRE | Phenolharz |
| RDL 44 (HB 19 Golden Brown) | Van Leer | Gelbbraun | - | Epoxy-Phenolharz |
| RDL 59 (Z4) | Van Leer | Olivgrün | - | Phenolharz |
| RDL 68 | Van Leer | Farblos | - | Phenoxyphenolharz |

Die Lacksysteme und Hilfsstoffe können beispielsweise bezogen werden bei DuPont Performance Coatings Austria GmbH VB Leipzig, Mölkau/Leipzig, Deutschland; Dupont Performance Coatings Ausria GmbH, Guntramsdorf, Österreich; Chem. Werke Kluthe GmbH, Heidelberg, Deutschland; Goldschmidt TIB GmbH, Mannheim, Deutschland; Grace Coatings, Geschäftsbereich Lacke, Norderstedt, Deutschland; ICI lacke Farben GmbH, Hilden, Deutschland; KNS Companies Inc, Carol Stream, USA-Illinois; Rembrandtin Lack Gesellschaft mbH, Wien, Österreich; Van Leer Verpackungen, Attendorn, Deutschland; Van Leer Nederland B.V., Vreelande, Niederlande und anderen mehr.

Die Beschichtungsmittel enthalten die verzweigten Polymere als anti-adhäsives Additiv in Mengen von 0,1 bis 10 Gew.-%, bevorzugt von 0,5 bis 7,5 Gew.-%, ganz besonders bevorzugt von 1 bis 5 Gew.-% bezogen auf den Feststoffgehalt des Beschichtungsmittels. Die verzweigten Polymere werden bevorzugt als Lösung oder als Emulsionen den Beschichtungsmitteln zugesetzt.

Die Beschichtungen können auch im Mehrschichtverfahren auf Grundierungen, Füller oder Basislacken aufgebracht werden.

Die Verarbeitung kann durch Verfahren wie Airmix-, Airless-, Heiß- oder Druckluft-Spritzen, Rollen, Rakeln, Bürsten, Sprayen, Streichen, Elektrotauchen, Schleudern oder Walzen erfolgen. Eine ggf. erforderliche Einstellen auf Verarbeitungsviskosität bei Spritz- oder Schleuderverfahren kann mittels geeigneter Verdünner erfolgen.

Die Aushärtung der Beschichtungsmittel ist abhängig von der jeweiligen Art der Vernetzung und kann im weiten Temperaturbereich von beispielsweise -10°C bis 250°C erfolgen. Überraschenderweise zeigen die Beschichtungsmittel auch bei Aushärtung bei Raumtemperatur sehr gute anti-adhäsive Eigenschaften.

Bei den polymeren Formmassen handelt es sich bevorzugt um Lackharze, Alkydharze, Polyesterharze, Epoxidharze, Polyurethanharze, ungesättigte Polyesterharze, Epoxidharze, Vinylesterharze, Polyethylen, Polypropylen, Polyamide, Polyethyleneterephthalat PVC, Polystyrol, Polyacrylnitril, Polybutadien, Polyvinylchlorid oder Mischungen aus diesen Polymeren.

Die polymeren Formmassen enthalten die verzweigten Polymere als anti-adhäsives Additiv in Mengen von 0,1 bis 10 Gew.-%, bevorzugt von 0,5 bis 7,5 Gew.-%, ganz besonders bevorzugt von 1 bis 5 Gew.-% bezogen auf das Gesamtgewicht der polymeren Formmassen. Die verzweigten Polymere werden den polymeren Formmassen bevorzugt als 100%ige Stoffe zugesetzt. Sie können jedoch auch bereits bei deren Herstellung (beispielsweise durch Polymerisation oder Polyaddition) anwesend sein.

Die polymeren Formmassen können als solche zur Herstellung von Verpackungsmaterialien - beispielsweise Fässern, Bechern, Dosen, Kanistern oder Flaschen - verwendet werden. Dabei kann das anti-adhäsive Additiv sowohl bei der Herstellung der polymeren Formmassen (also beim Polymerisationsprozess) als auch bei der Herstellung der Verpackungsmaterialien - beispielsweise bei der Extrusion - zugesetzt werden.

Die polymeren Formmassen können zur Beschichtung weiterer Materialien verwendet werden. So können beispielsweise metallische Dosen oder Fässer mit den additivierten polymeren Formmassen in Form einer polymeren Innenbeschichtung beschichtet werden.
Die polymeren Formmassen können auch in Verbundmaterialien eingearbeitet sein. Beispielhaft jedoch nicht einschränkend sei die Verwendung in laminierten Materialien - wie sie allgemein beispielsweise in Form der TETRAPAK® Verpackungen bekannt sind - genannt. Hier werden polymere Formmassen, wie beispielsweise Polyethylen, und ggf. weitere Schichten (wie beispielsweise Aluminium) auf Papier oder Pappe aufgebracht, um Verpackungen mit hoher Geruchs- und Geschmacksechtheit zu erzielen. Entsprechende Materialien und Verfahren sind beispielsweise in EP-A 0 423 511 oder EP-A 0 621 202 beschrieben. Die anti-adhäsiven Additive können den in diesen Materialien verwendeten polymeren Formmassen zugesetzt werden.

Des weiteren können die Beschichtungsmittel und polymere Formmassen Pigmente, Füllstoffe und/oder weitere Hilfsstoffe enthalten. Hilfsstoffe meint meist in kleinen Mengen zugesetzte Stoffe, welche spezielle chemische oder technologische Wirkungen haben. Die zugegebene Menge der Hilfsstoffe beträgt insgesamt im allgemeinen unter 10 Gew.-% bezogen auf das Gewicht des Beschichtungsmittel oder der polymere Formmasse, bevorzugt unter 5 Gew.-%, besonders bevorzugt unter 1 Gew.-%, am meisten bevorzugt unter 0,1 Gew.-%.

Die stoffliche Basis der Hilfsstoffe ist sehr breit gefächert, da die beabsichtigten Wirkungen bei einem Einsatz im Beschichtungsmittel sehr unterschiedlich sind. Hilfsstoffe können nach ihrer Funktion in folgende Gruppen eingeteilt werden wie z.B. Netz- und Dispergiermittel, Härtungsbeschleuniger (Katalysatoren), Emulgatoren, grenzflächenaktive Verbindungen (z.B. Netz- und Dispergiermittel), Stabilisatoren, Viskositätsmodifizierer, Bindemittel, Verdickungsmittel, Konservierungsmittel, Filmbildehilfsmittel, Hydrophobiermittel, Lichtschutzmittel, Alterungsschutzmittel, Verlaufmittel und Filmbildehilfsmittel (z.B. Hochsieder, Koaleszenzmittel), Oberflächenmodifizierungsmittel (z.B. Slipadditive, Mattierungsmittel), Korrosionsinhibitoren, Biozide, Flammhemmittel, Photoinitiatoren, Hautverhütungsmittel, Entschäumer, Haftvermittler usw..

Die Beschichtungsmittel und polymeren Formmassen können pigmentiert oder unpigmentiert eingesetzt werden. Pigmente meint z.B. feinteilige, im Anwendungsmedium praktisch unlösliche, farbgebende und/oder korrosionsschützende Pulver.

Typische anorganische Pigmente sind beispielsweise Titandioxid, vorzugsweise in der Rutilform, Bariumsulfat, Zinkoxid, Zinksulfid, Zinkphosphat, basisches Bleicarbonat, Antimontrioxid, Lithopone (Zinksulfid und Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau Perlglanzpigmente oder Schweinfurter Grün enthalten. Neben den anorganischen Pigmenten können die Zubereitungen auch organische Farbpigmente, z.B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Ferner können als Hilfsstoff Pigmentverteiler, bevorzugt mit einer Säurezahl, bestimmt nach DIN 53402, von weniger als 600, zugesetzt werden. Geeignete Pigmentverteiler sind u.a. Polyacrylsäuren oder Copolymere der Acrylsäure, Methacrylsäure, des Maleinsäureanhydrids, der Itaconsäure, Fumarsäure oder der Crotonsäure mit Comonomeren wie (Meth)acrylester, Styrol, α-Olefine, Maleinsäurehalbester sowie langkettige Vinylester der Versatic-Säuren. Weiterhin können als Pigmentverteiler auch Polyphosphate u.a. Natrium- oder Kaliumpolyphosphate eingesetzt werden. Vorzugsweise werden als Pigmentverteiler III Polyacrylsäuren oder Copolymere von Acrylsäure, Styrol und α-Methylstyrol, Copolymere von Acrylsäure mit Alkylacrylaten wie n-Butylacrylat, Copolymere des Maleinsäureanhydrids mit C₁₀-C₃₀-α-Olefinen (verseift) oder Copolymere des Maleinsäureanhydrids mit Styrol (verseift) verwendet. Als Pigmentverteiler eignen sich weiterhin amphiphile Copolymere, hergestellt durch polymeranaloge Umsetzung von säuregruppenreichen Polymeren (z.B. Polyacrylsäure) mit langkettigen Alkoholen, Aminen oder Epoxiden oder von Copolymeren, welche Carbonsäureanhydride enthalten (z.B. Maleinsäureanhydrid und Styrol) mit Alkoholen oder Aminen.

Außerdem können die Beschichtungsmittel und polymeren Formmassen Füllstoffe enthalten. Füllstoffe meint im Anwendungsmedium praktisch unlösliche Pulver, welche bestimmte technologische Eigenschaften ergeben oder verbessern und dem Beschichtungsmittel mehr Volumen (Fülle) verleihen. Geeignete anorganische Füllstoffe umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. Ferner können Teflon, Titandioxid, Aluminiumhydroxid, Cellulosefasern, verstärkende Fasern wie Glasfasern, C-Fasern und Aramidfasern eingesetzt werden. Ferner sind Mischungen derselben wie Calciumcarbonat/Kaolin, Calciumcarbonat/Talkum geeignet.

Zur Einstellung der Filmbildeeigenschaften können sog. Filmbildehilfsmittel zugesetzt werden, z.B. Ethylenglykol, Propylenglykol, Butylenglykol, Hexylenglykol, Alkylether und -etherester von Glykolen und Polyglykolen, z.B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z.B. Butoxybutylacetat, ferner Alkylester aliphatischer Mono- und Dicarbonsäuren, z.B. Texanol® der Eastman, oder technische Gemische von Dibutylestern der Bernsteinsäure, Glutarsäure und Adipinsäure enthalten.

Verdickungsmittel sind beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder vorzugsweise hydrophob modifizierte Polyetherurethane, wie sie beispielsweise von Chen N et al. (1997) J Coatings Techn 69(867):73ff. und von Hester RD et al. (1997) J Coatings Techn 69(864):109ff. beschrieben sind und auf deren Offenbarung hiermit in vollem Umfang Bezug genommen wird. Auch anorganische Verdickungsmittel, z.B. Bentonite oder Hektorit, können verwendet werden.

Des weiteren können die Beschichtungsmittel Lösemittel enthalten. Lösemittel meint Flüssigkeiten oder Flüssigkeitsgemische, welche den bzw. die Filmbildner zu lösen vermögen. Beispielhaft jedoch nicht einschränkend seinen zu nennen Butylacetat, Butylglykol, Testbenzin, Wasser. Bei Verwendung zum Einstellen der Verarbeitungseigenschaften (Viskosität) werden diese auch Verdünnungsmittel oder Verdünner genannt. Lackverdünnern sind in der Regel Gemische aus Alkoholen, Estern, Aliphaten und/oder Aromaten, die auf die jeweiligen Lacke und Applikationsverfahren abgestimmt sind. Beispielhaft als geeignet Verdünner sind zu nennen V0449 (DuPont; Art.-Nr.: 38044105), HAKU 4064-1 (Kluthe; Art.-Nr.:'0190641), HAKU 4062 (Kluthe; Art.-Nr.: '014062), Protefanr Verdünnung 10 T-V/F (Goldschmidt; Art.-Nr.: '00301757).

Dispersionsmittel meint meist flüssige Verbindungen, welche den bzw. die Filmbildner nicht lösen, jedoch in feiner, mikroheterogener Verteilung (Dispersion, Emulsion) halten. Beispielhaft seien Wasser, bei "non aqueous dispersions" auch Kohlenwasser-stoffe zu nennen.

Weiterhin können als Hilfsstoffe nichtionische oder anionische Emulgatoren verwendet werden. Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad 10 bis 50 als alleinige, nichtionische Emulgatoren verwendet. Anionische Emulgatoren umfasst beispielhaft Alkali- und Ammoniumsalze von Alkylsulfaten (Alkylrest: C₈-C₁₆), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192-208). Bevorzugte anionische grenzflächenaktive Substanzen sind Verbindungen wie Dowfax® 2Al (Warenzeichen der Dow Chemical Company), sowie die in US 4,269,749 beschriebenen Verbindungen.

Darüber hinaus können geeignete Schutzkolloide, wie beispielsweise Polyvinylalkohole, Cellulosederivate oder Vinylpyrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, S. 411-420.

Das Molekulargewicht der als Bindemittel verwendeten Copolymerisate kann durch Zugabe geringer Mengen einer oder mehrerer, das Molekulargewicht regelnder Substanzen, z.B. organische Thioverbindungen oder Allylalkohole, eingestellt werden.

Im Anschluss an die eigentliche Polymerisationsreaktion zur Herstellung eines anti-adhäsiven Additives und/oder eines Bindemittels ist es vorteilhaft, die Polymerisate weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxidsulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (Natriumhydrogensulfit-Additionsprodukt an Aceton), Ascorbinsäure bzw. reduzierend wirkende Zuckerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsysteme können auch lösliche Salze von Metallen wechselnder Wertigkeit, wie Eisen-, Kupfer oder Vanadiumsalze, zugesetzt werden. Häufig werden auch Komplexbildner zugegeben, die die Metallsalze unter den Reaktionsbedingungen in Lösung halten.

### SYNTHESEBEISPIELE ZUR HERSTELLUNG DER VERZWEIGTEN POLYMERE

### SYNTHESEBEISPIELE FÜR VERZWEIGTE POLYMERE AUS RADIKALISCHER POLYMERISATION

### Beispiel 1

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 5000 g und 100 g Methoxypropylacetat vorgelegt und gründlich vermischt. Während der gesamten Reaktion wird Stickstoff übergeleitet. Die Temperatur wird auf 122°C erhöht und es wird innerhalb von vier Stunden eine Mischung aus 2 g Methacrylsäure, 42,7 g iso-Butylmethacrylat, 26,0 g Hydroxypropylmethacrylat, 29,3 g Styrol und 1,5 g Trigonox® C (tert.-Butylperoxy- benzoat, Akzo Nobel, NL-Amersfoort) zudosiert. Nach beendeter Dosierung werden sofort 0,25 g Trigonox C zugegeben. Nach weiteren 30 Minuten und 60 Minuten werden noch einmal je 0,25 g Trigonox® C zugesetzt. Danach wird der Ansatz noch eine Stunde bei 122°C gehalten. Der Ansatz ist klar und viskos. Die OH-Zahl der Polymerlösung beträgt ca. 53 mg KOH/g. NMR-spektroskopische Untersuchungen zeigen die erwarteten Signale des poly-dimethylsiloxanhaltigen Methacrylates.

### Beispiel 2

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 20000 g und 100 g Methoxypropylacetat vorgelegt und gründlich vermischt. Während der gesamten Reaktion wird Stickstoff tibergeleitet. Die Temperatur wird auf 122°C erhöht und es wird innerhalb von drei Stunden eine Mischung aus 2 g Methacrylsäure, 14,5 g eines Caprolacton-modifizierten Hydroxyethylacrylates (Tone M-100, Union Carbide, durchschnittliches Molekulargewicht 344), 12 g n-Butylmethacrylat, 19,5 g Hydroxypropylmethacrylat, 22,8 g Styrol, 19,2 g Methylmethacrylat und 1,5 g Trigonox® C (tert.-Butylperoxybenzoat, Akzo Nobel, NL-Amersfoort) zudosiert. Nach beendeter Dosierung werden sofort 0,25 g Trigonox® C zugegeben. Nach weiteren 30 Minuten und 60 Minuten werden noch einmal je 0,25 g Trigonox® C zugesetzt. Danach wird der Ansatz noch eine Stunde bei 122°C gehalten. Der Ansatz ist klar und viskos. Die OH-Zahl des Polymers beträgt ca. 53 mg KOH/g. NMR-spektroskopische Untersuchungen zeigen die erwarteten Signale des polydimethylsiloxanhaltigen (Meth)-acrylates.

### Beispiel 3

In einem mit Rührer, Thermometer, Tropftrichter und Stickstoffeinleitungsrohr versehenen Vierhalskolben werden 34,5 g eines Copolymers aus Styrol und Maleinsäureanhydrid (SMA2000, Atofina, Gewichtsmittel des Molekulargewicht 2500, Verhältnis Styrol/Maleinsäureanhydrid 2:1) in 50,6 g Methoxypropylacetat gelöst und die Lösung auf 120°C erwärmt. In 5 Minuten werden 3,75 g eines einseitig endständig hydroxyfunktionell modifizierten Polydimethylsiloxans mit einem Gewichtsmittel des Molekulargewichtes von 1000 g zudosiert'. 30 Minuten später werden 12,6 g 2-Ethylhexanol in 5 Minuten zudosiert. Danach wird die Reaktionsmischung noch 2 Stunden bei 120°C und eine Stunde bei 50°C gehalten. Man erhält ein klares Produkt mit einem Feststoffgehalt von etwa 50 %. Bei der IR-spektroskopischen Untersuchung ist kein Anhydrid mehr zu erkennen. Das mittlere Molekulargewicht des Polymers beträgt etwa 3800 g. NMR-spektroskopische Untersuchungen zeigen die erwarteten Signale des polydimethylsiloxanmodifizierten Styrol/Maleinsäure-Halbester-Copolymers.

### Beispiel 4

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 5000 g und 252 g Xylol vorgelegt und gründlich vermischt. Während der gesamten Reaktion wird Stickstoff übergeleitet. Die Mischung wird auf 130°C erhitzt und innerhalb von 220 Minuten wird eine Mischung aus 5 g Caprolacton-modifiziertem Hydroxyethylacrylat (Tone M-100, Union Carbide, durchschnittliches Molekulargewicht 344), 49 g n-Butylmethacrylat, 12 g Hydroxyethylmethacrylat, 23,5 g α-Methylstyrol und 1,5 g Trigonox® C (tert.-Butylperoxybenzoat, Akzo Nobel, NL-Amersfoort) zudosiert. Nach beendeter Dosierung wird die Reaktionsmischung noch eine Stunde bei 130°C gehalten. Der Ansatz ist jetzt milchig trüb. Zur Entfernung der Lösemittel und überschüssiger Reaktionspartner wird die Mischung einer Destillation unter reduziertem Vakuum unterworfen. Nach einer Destillationszeit von 2 Stunden bei 130°C und ca. 20 mbar Vakuum erhält man in 54,5 %iger Ausbeute ein opakes Polymer mit einem gewichtsmittleren Molekulargewicht von etwa 14700 g. NMR-spektroskopische Untersuchungen zeigen die erwarteten Signale des polydimethylsiloxanhaltigen (Meth)acrylates.

### Beispiel 5 Herstellung eines Additives durch Group-Transferpolymerization

Vorbereitung: Sämtliche Monomere und Lösemittel werden gereinigt, indem sie durch Glassäulen mit neutralem Aluminia geleitet werden.

In einem gut getrocknetem Vierhalskolben beschickt mit mechanischem Rührer, Rückflusskühler, Tropftrichter und einem Gummiseptum werden in trockener N₂-Atmosphäre 100 g vorgereinigtes Tetrahydrofuran vorgelegt. Mittels Spritzen werden durch das Septum 1,5 g des Initiators 1-Methoxy-1-trimethylsiloxy-2-methylpropen und 0,15 ml 1M Tetrabutylammonium-3-chlorbenzoat in Acetonitril als Katalysator zugesetzt. Innerhalb von 15 Minuten wird dieser Reaktionsmischung eine Mischung aus 70 g Butylmethacrylat und 20 g N,N-Dimethylaminoethylmethacrylat zugetropft. Mit Hilfe eines Wasserbades wird die Reaktionstemperatur bei 40°C gehalten. Nach einer Nachreaktionszeit von 10 Minuten werden weitere 0,15 ml 1 M Tetrabutylammomonium-3-chlorbenzoat in Acetonitril zugesetzt und innerhalb von 5 Minuten 40 g einer 50 %igen Lösung eines vorgereinigten Polydimethylsiloxanmakromonomeren mit einer terminalen Methacrylgruppe und einem Gewichtsmittel des Molekulargewichtes von 1000 g in THF zugetropft. Man lässt die Reaktionslösung ohne Kühlung eine Stunde Rühren und setzt dann zum Abbruch der lebenden Kettenenden 3 ml Ethanol zu. Man erhält eine leicht opake Lösung eines Polymers.

### Beispiel 6

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 5000 g und 100 g DIBK vorgelegt und gründlich vermischt. Während der gesamten Reaktion wird Stickstoff übergeleitet. Die Mischung wird auf 122°C erhitzt und innerhalb von 180 Minuten wird eine Mischung aus 15 g Caprolacton-modifiziertem Hydroxyethylacrylat (Tone M-100, Union Carbide, gewichtsmittleres Molekulargewicht 344), 12 g n-Butylacrylat, 20 g Hydroxyethylmethacrylat, 22,5 g Styrol, 20,5 g Methylmethacrylat und 1,5 g Trigonox C (tert.-Butylperoxybenzoat, Akzo Nobel, NL-Amersfoort) zudosiert. Nach beendeter Dosierung wird die Temperatur bei 122°C gehalten. Sofort nach der Dosierung, 30 Minuten später und weitere 30 Minuten später werden je 0,25 g Trigonox® C zugegeben. Nach der letzten Zugabe wird noch eine Stunde nachgerührt. Die Reaktionsmischung ist jetzt leicht opak. Zur Entfernung des Lösemittels und überschüssiger Reaktionspartner wird die Mischung einer Destillation unter reduziertem Vakuum unterworfen. Nach einer Destillationszeit von 90 Minuten bei 140°C und ca. 20 mbar Vakuum erhält man in ca. 94 %iger Ausbeute ein opakes Polymer. Das gewichtsmittlere Molekulargewicht wurde mittels Gelpermeationschromatographie mit Polystyrol als Standard zu etwa 65000 g bestimmt.

### Beispiel 7

In einem mit Rührer, Thermometer, Tropftrichter, Destillationsaufsatz und Stickstoffeinleitungsrohr versehenen Vierhalskolben werden 5 g eines Polydimethylsiloxanmakromonomeren mit einer terminalen Methacrylgruppe und einem durchschnittlichen Molekulargewicht von 5000 g, 5 g eines Polydimethylsiloxanmakromonomeren mit einer terminalen Methacrylgruppe und einem Gewichtsmittel des Molekulargewichtes von 1000 g, 50 g Xylol und 50 g Butylacetat vorgelegt und gründlich vermischt. Während der gesamten Reaktion wird Stickstoff übergeleitet. Die Mischung wird auf 122°C erhitzt und innerhalb von 180 Minuten wird eine Mischung aus 15 g eines Caprolacton-modifizierten Hydroxyethylacrylat (Tone M-100, Union Carbide, durchschnittliches Molekulargewicht 344 g), 12 g n-Butylacrylat, 20 g Hydroxyethylmethacrylat, 22,5 g StyroL, 20,5 g Methylmethacrylat und 1,5 g Trigonox® C (tert.-Butylperoxybenzoat, Akzo Nobel, NL-Amersfoort) zudosiert. Nach beendeter Dosierung wird die Temperatur bei 122°C gehalten. Sofort nach der Dosierung, 30 Minuten später und weitere 30 Minuten später werden je 0,25 g Trigonox C zugegeben. Nach der letzten Zugabe wird noch eine Stunde nachgerührt. Zur Entfernung der Lösemittel und überschüssiger Reaktionspartner wird die Mischung einer Destillation unter reduziertem Vakuum unterworfen. Nach einer Destillationszeit von 90 Minuten bei 140°C und ca. 20 mbar Vakuum erhält man in ca. 99,5 %iger Ausbeute ein farbloses Polymer. 50 g diese Polymers werden in einer Mischung aus 25 g Xylol und 25 g Butylacetat gelöst und mit 0,05 g p-Toluolsulfonsäure und 0.42 g Maleinsäureanhydrid versetzt. Nach 3 Stunden erwärmen auf 90°C ist im IR-Spektrum kein Anhydrid mehr erkennbar.

### Beispiel 8

50 g der Polymerlösung aus Beispiel 1 mit einer OH-Zahl von ca. 53 mg KOH/g werden mit 4,3 g Maleinsäureanhydrid versetzt und sechs Stunden unter Rühren auf 90°C erhitzt. Nach Ablauf dieser Zeit ist bei einer IR-spektroskopischen Untersuchung kein Anhydrid mehr nachweisbar. Man erhält eine leicht gelb gefärbte 56,3 %ige Polymerlösung.

### Beispiel 9 Synthesebeispiel für ein Polykondensat

In einem mit Rührer, Thermometer und Wasserabscheider versehenen Dreihalskolben werden 100 g Setal® 183 XX-60 (gesättigtes Polyesterharz, als Lieferform 60 %ige Lösung in Xylol, Säurezahl 8,3 mg KOH/g, Akzo Nobel Resins, NL-Bergen op Zoom) zusammen mit 7,5 g eines Polydimethylsiloxanmakromonomeren mit einer terminalen Hydroxyfunktion und einem Gewichtsmittel des Molekulargewichtes von 10000 g und 0,3 g p-Toluolsulfonsäure vorgelegt und gründlich vermischt. Danach wird der Ansatz etwa sechs Stunden am Rückfluss gekocht, bis das entstehende Wasser entfernt ist. Es stellt sich eine Temperatur von etwa 142°C bis 145°C ein. Man erhält eine gelbbraun gefärbte Polymerlösung. NMR-spektroskopische Untersuchungen zeigen die erwarteten Strukturen eines über Esterbindung verknüpften Polydiorganosiloxans. Im IR-Spektrum sind keine OH-Gruppen sichtbar.

### Beispiel 10 Synthesebeispiel für ein Polyaddukt

In einem mit Rührer, Thermometer, Stickstoffeinleitungsrohr und Tropftrichter versehenen Vierhalskolben werden 50 g n-Butylacetat, 5,38 g Desmodur® N3300 (Isocyanurat auf Basis Hexamethylendüsocyanat, NCO-Gehalt 21,5 %, Bayer AG, Leverkusen, Deutschland) und 10 g eines Polydimethylsiloxanmakromonomeren mit einer terminalen Hydroxyfunktion und einem Gewichtsmittel des Molekulargewichtes von etwa 1000 g (OH-Zahl 51,5 mg KOH/g) vorgelegt. Während der gesamten Reaktion wird trockener Stickstoff übergeleitet. Man erhitzt auf 60°C. Dann werden 0,2 g einer 1 %igen Lösung von Dibutyldizinnlaurat in Xylol zugegeben. Nach 30 Minuten werden noch einmal 0,7 g einer 1 %igen Lösung von Dibutyldizinnlaurat in Xylol zugegeben und man beginnt sofort mit der Dosierung einer Mischung aus 50 g n-Butylacetat, 25,17 g Isophorondiisocyanat, 55,79 g Speziol C36/2 (Dimerdiol, OH-Zahl 205 mg KOH/g, Cognis Deutschland GmbH, Düsseldorf, Deutschland) und 3,2 g 1-Butanol. Die Mischung wird so schnell zugetropft, dass die Temperatur der Mischung nicht über 65°C steigt. Die Viskosität der Lösung steigt und drei Stunden nach Beendigung der Dosierung ist titrimetrisch kein freies Isocyanat mehr nachweisbar. Man erhält eine farblose, klare Lösung. Das gewichtsmittlere Molekulargewicht wird mittels Gelpermeationschromatographie zu 5200 g bestimmt. '

### Beispiel 11 Einarbeitung der anti-adhäsiven Additive in Lacksysteme

Die anwendungstechnische Prüfung der anti-adhäsiven Additive erfolgte in verschiedene Lacksystemen.

### 11.1 2-Komponenten-System, isocyanatvernetzend

### Stammlack:

| | |
|---|---|
| 75,00 % | Macrynal® SM 510n (hydroxygruppenhaltiges Acrylharz, Vianova Resins, Frankfurt, Deutschland), 60 %ig in Xylol/ Solventnaphta/Butylacetat 2:1:1 |
| 5,00 % | Dowanol® PMA |
| 5,00 % | Solvesso® 100 |
| 6,50 % | Xylol |
| 8,00 % | Butylacetat |
| 0,50 % | Byk® 066 (Entschäumer, BYK-CHEMIE, Wesel, Deutschland) |
| 100,00 % | |

Alle Komponenten werden durch Rühren homogenisiert.

### Härterlösung:

| | |
|---|---|
| 50,00 % | Desmodur® N3390 (Polyisocyanat, Bayer AG, Leverkusen, Deutschland) 90 %ig in Butylacetat/SN100 1:1 |
| 35,00 % | Butylacetat |
| 15.00 % | Xylol |
| 100,00 % | |

Alle Komponenten werden durch Rühren homogenisiert. Stammlack und Härterlösung werden unabhängig voneinander hergestellt. Die in den Beispielen 1, 2, 3, 4, 6 und 7 hergestellten verzweigten Polymere werden in den Stammlack in einer Konzentration von 2,67 % bezogen auf den Feststoffanteil des Gesamtlackes eingerührt. Zum Vergleich werden auch ein Hydroxyalkylpolydimethylsiloxan (TegoProtect® 5000), ein Siliconpolyacrylat (TegoProtect 5001) sowie ein hydroxyfunktionelles, lineares, polyestermodifiziertes Polydimethyisiloxan (BYK-370) eingearbeitet. Kurz vor der Applikation werden Stammlack und Härterlösung im Verhältnis 2:1 gemischt. Nach der Einarbeitung werden die additivierten Lacke in einem 100 µm-Nassfilm mit einem Spiralrakel auf ein geprimertes Alublech aufgezogen. Nach 30 Minuten Trocknen bei Raumtemperatur werden die Bleche noch 30 Minuten bei 80°C im Lacktrockenschrank ausgehärtet. Von jedem additivierten Lack werden jeweils zwei Bleche gefertigt. Je ein Blech wird in einer Laborspülmaschine mit einem konventionellen Haushaltspülmittel bei 80°C gewaschen. Nach den Waschen werden die fertigen lackierten Bleche mindestens 24 Stunden bei Raumtemperatur konditioniert. Danach werden die unbehandelten und die behandelten Bleche den unten angegebenen Tests unterzogen.

### 11.2 Acrylat/Melamin-Einbrennlack

| | |
|---|---|
| 54,00 % | Setalux® C1502 (Acrylat-Einbrennharz, Akzo Nobel Resins, Bergen op Zoom, Niederlande) |
| 28,00 % | Maprenal® MF600 (Melamin-Einbrennharz, Vianova Resins, Frankfurt, Deutschland) |
| 4,00 % | Shellsol® |
| 4,00 % | Solvesso® 150 |
| 10.00 % | Xylol |
| 100,00 % | |

Herstellung des Acrylat-Melamin-Einbrennlackes: Alle Komponenten werden gemischt und 10 Minuten mit einem Dissolver bei einer Umfangsgeschwindigkeit von 5 m/s homogenisiert. Danach wird die Viskosität auf 24 Sekunden, DIN 4mm-Becher, mit Xylol eingestellt. Die zu prüfenden anti-adhäsiven Additive werden 10 Minuten mit einem Scandex®-Rüttler in einer Konzentration von 2 Gew.-% Wirksubstanz bezogen auf den Feststoffanteil des Lackes eingearbeitet. Zum Vergleich werden die bei der Herstellung des Einbrennlackes beschriebenen Verbindungen (TegoProtect® 5000, TegoProtect® 5001 sowie BYK-370) zugesetzt. Nach der Einarbeitung werden die additivierten Lacke in einem 100 µm-Nassfilm mit einem Spiralrakel auf ein geprimertes Alublech aufgezogen. Nach einer Ablüftzeit von 10 Minuten werden die Bleche 20 Minuten bei 140°C eingebrannt. Von jedem additivierten Lack werden jeweils zwei Bleche gefertigt. Je ein Blech wird in einer Laborspülmaschine mit einem konventionellen Haushaltspülmittel bei 80°C gewaschen. Nach den Waschen werden die fertigen lackierten Bleche mindestens 24 Stunden bei Raumtemperatur konditioniert. Danach werden die unbehandelten und die behandelten Bleche den nachfolgenden Tests unterzogen.

### 11.3 Epoxid/Phenolharz-Einbrennlack

Es wurde Goldlack WL-105700 (Innenschutzlack auf Epoxid (MG>700) /Phenolharz Basis, Hersteller: Rembrandtin Lack Gesellschaft mbH, Wien, Österreich; Art.-Nr.: 210097; Lack in Lieferform) vorgelegt und mit einem entsprechend Beispiel 1 hergestellten anti-adhäsiven Additiv (25 % ige Lösung in MPAc) versetzt und gut verrührt. Dazu wurden in einem ersten Ansatz zum Erreichen einer 1 %igen Endkonzentration an anti-adhäsiven Additiv 4 Gew.-% der Additiv-Formulierung eingesetzt. Zum Erreichen einer 2 %igen Endkonzentration an anti-adhäsiven Additiv wurden 8 Gew.-% der Additiv-Formulierung eingesetzt.

Die Herstellung der in nachfolgenden Tests (siehe Beispiel 13 bis 16) eingesetzten Fässer (Stahlfässer mit je 25 kg Nettofüllgewicht; Fa. Gottlieb Duttenhöfer GmbH & Co.KG, Hassloch, Deutschland) erfolgte im konventionellen Druckluft-Spritzverfahren (Handlackierung) . Einbrennbedingungen: 8 bis 10 min bei 210 bis 220°C Objekt-Temperatur.

### Beispiel 12 Einarbeitung der anti-adhäsiven Additive in polymere Formmassen (Gel-Coat-Mischungen)

Die Polymerlösung aus Beispiel 8 wird entsprechend der nach-folgenden Tabelle mit einem Gel-Coat sowie Butanox M-50 zu den polymeren Formmassen A und B (= GelCoat-Mischung A und Gel-Coat-Mischung B) umgesetzt.

Rezeptur (in Gewichtsprozent) für die getesteten Gel-Coat-Mischungen:

| | **Gel-Coat-Mischung A** | **Gel-Coat Mischung B** |
|---|---|---|
| Gel-Coat® (Radikalstarter, Akzo Nobel, NL-Amersfoort) | 97 | 97 |
| Butanox® M-50 (Oldopal 733-0001, Büfa GmbH, D-Oldenburg | 2 | 2 |
| Polymerlösung aus Beispiel 8 | 1 | - |

Die anti-adhäsiven Eigenschaften dieser Gel-Coat-Mischungen werden bestimmt. Dazu werden zunächst Metallgefäße durch Abwaschen mit Ethylacetat gründlich entfettet. Nach einer Ablüftzeit von 20 Minuten werden die Gel-Coat-Mischungen A und B jeweils mit einer Schichtdicke von 750 µm auf die Gefäßinnenwände aufgebracht. Man lässt alle Gel-Coats drei Tage aushärten und tested anschließend auf Restentleerung entsprechend den Beispielen 13 bis 16.

### Beispiel 13 Prüfung von Fässer auf Restentleerung von Vitamin E Acetat

Stahlfässer mit je 25 kg Nettofüllgewicht (Fa. Gottlieb Duttenhöfer GmbH & Co.KG, Hassloch, Deutschland) wurden mit Einbrennlack Goldlack WL-105700 (Innenschutzlack auf Epoxid (MG>700) / Phenolharz Basis, Hersteller: Rembrandtin Lack Gesellschaft mbH, Wien, Österreich; Art.-Nr.: 210097; Lack in Lieferform) wie oben beschrieben mit bzw. ohne Zusatz an anti-adhäsiven Additiv lackiert. Dabei enthielt der Lack für die Fässer Nummer 1 und 4 1 % anti-adhäsives Additiv und für die Fässer Nummer 2 und 5 2 % anti-adhäsives Additiv, während die Fässer Nummer 3 und 6 ohne anti-adhäsiven Additiv-Zusatz lackiert wurden. Die Fässer wurden mit Vitamin E Acetat food (BASF Aktiengesellschaft; PN 074099) beschickt. Die Fässer 1, 2 und 3 wurden im Wärmeschrank auf 60°C für ca. 17 h aufgeheizt. Anschließend wurden die Fässer aus dem Wärmeschrank genommen für 1 Minute ausgegossen. Nach nochmals 3 Minuten Wartezeit wurde für weitere 2 Minuten entleert und der Restinhalt ermittelt.

| | Fass 1 | Fass 2 | Fass 3 |
|---|---|---|---|
| Nettoinhalt | 25,02 kg | 25,04 kg | 25,04 kg |
| Restinhalt | 0,120 kg | 0,130 kg | 0,190 kg |

Die Fässer 4, 5 und 6 wurden zunächst aus dem Wärmeschrank entnommen und für 1 Minute entleert. Anschließend wurde die Fässer im Wärmeschrank 60 Minuten bei 60°C nachgeheizt, nochmals 2 Minuten restentleert und der Restinhalt ermittelt.

| | Fass 4 | Fass 5 | Fass 6 |
|---|---|---|---|
| Nettoinhalt | 25,03 kg | 25,03 kg | 25,07 kg |
| Restinhalt | 0,03 kg | 0,03 kg | 0,09 kg |

### Beispiel 14 Prüfung von Fässer auf Restentleerung von Vitamin E Acetat

Stahlfässer mit je 25 kg Nettofüllgewicht (Fa. Gottlieb Duttenhöfer GmbH & Co.KG, Hassloch, Deutschland) wurden mit Einbrennlack Goldlack WL-105700 (Innenschutzlack auf Epoxid (MG>700) Phenolharz Basis, Hersteller: Rembrandtin Lack Gesellschaft mbH, Wien, Österreich; Art.-Nr.: 210097; Lack in Lieferform) mit bzw. ohne Additivzusatz wie oben beschrieben lackiert. Dabei enthielt der Lack für die Fässer Nummer 1 und 4 1 % anti-adhäsives Additiv und für die Fässer Nummer 2 und 5 2 % anti-adhäsives Additiv, während die Fässer Nummer 3 und 6 ohne Additiv-Zusatz lackiert wurden. Die Fässer wurden mit Vitamin E Acetat food (BASF Aktiengesellschaft PN 074099) beschickt.

Die Fässer 1, 2 und 3 wurden im Wärmeschrank auf 80°C für ca. 16 h aufgeheizt. Anschließend wurden die Fässer aus dem Wärmeschrank genommen und für 1 Minute ausgegossen. Nach nochmals 3 Minuten Wartezeit wurde für weitere 2 Minuten entleert und der Restinhalt ermittelt.

| | Fass 1 | Fass 2 | Fass 3 |
|---|---|---|---|
| Nettoinhalt | 25,03 kg | 25,08 kg | 25,00 kg |
| Restinhalt | 0,08 kg | 0,085 kg | 0,121 kg |

### Beispiel 15 Prüfung von Fässer auf Restentleerung von Vitamin A Palmitat

Stahlfässer mit je 25 kg Nettofüllgewicht (Fa. Gottlieb Duttenhöfer GmbH & Co.KG, Hassloch, Deutschland) wurden mit Einbrennlack Goldlack WL-105700 (Innenschutzlack auf Epoxid (MG>700) / Phenolharz Basis, Hersteller: Rembrandtin Lack Gesellschaft mbH, Wien, Österreich; Art.-Nr.: 210097; Lack in Lieferform) mit bzw. ohne Additivzusatz wie oben beschrieben lackiert. Dabei enthielt der Lack für die Fässer Nummer 1 und 4 1 % anti-adhäsives Additiv und für die Fässer Nummer 2 und 5 2 % anti-adhäsives Additiv, während die Fässer Nummer 3 und 6 ohne Additiv-Zusatz lackiert wurden. Die Fässer wurden mit Vitamin A Palmitat 1,6 Mio feed (BASF Aktiengesellschaft PN 073930) beschickt. Die Fässer 1, 2 und 3 wurden im Wärmeschrank auf 60°C für ca. 16 h aufgeheizt. Anschließend wurden die Fässer aus dem Wärmeschrank genommen und für 1 Minute ausgegossen. Nach nochmals 3 Minuten Wartezeit wurde für weitere 2 Minuten entleert und der Restinhalt ermittelt.

| | Fass 1 | Fass 2 | Fass 3 |
|---|---|---|---|
| Nettoinhalt | 25,02 kg | 25,025 kg | 25,018 kg |
| Restinhalt | 0,024 kg | 0,023 kg | 0,100 kg |

### Beispiel 16 Prüfung von Fässer auf Restentleerung von Vitamin A Palmitat

Stahlfässer mit je 25 kg Nettofüllgewicht (Fa. Gottlieb Duttenhöfer GmbH & Co.KG, Hassloch, Deutschland) wurden mit Einbrennlack Goldlack WL-105700 (Innenschutzlack auf Epoxid (MG>700) / Phenolharz Basis, Hersteller: Rembrandtin Lack Gesellschaft mbH, Wien, Österreich; Art.-Nr.: 210097; Lack in Lieferform) mit bzw. ohne Additivzusatz wie oben beschrieben lackiert. Dabei enthielt der Lack für die Fässer Nummer 1 und 4 1 % anti-adhäsives Additiv und für die Fässer Nummer 2 und 5 2 % anti-adhäsives Additiv, während die Fässer Nummer 3 und 6 ohne Additiv-Zusatz lackiert wurden. Die Fässer wurden mit Vitamin A Palmitat 1,0 Mio ph (BASF Aktiengesellschaft PN 078915) beschickt.

Die Fässer 1, 2 und 3 wurden im Wärmeschrank auf 60°C für ca. 16 h aufgeheizt. Anschließend wurden die Fässer aus dem Wärmeschrank genommen und für 1 Minute ausgegossen. Nach nochmals 3 Minuten Wartezeit wurde für weitere 2 Minuten entleert und der Restinhalt ermittelt.

| | Fass 1 | . Fass 2 | Fass 3 |
|---|---|---|---|
| Nettoinhalt | 25,01 kg | 25,00 kg | 25,00 kg |
| Restinhalt | 0,009 kg | 0,010 kg | 0,075 kg |

## Patentansprüche

1. Verwendung von Verpackungsmaterialien enthaltend mindestens ein Beschichtungsmittel mit anti-adhäsiven Eigenschaften, welches als Additiv 0,1 bis 10 Gew.-% bezogen auf den Feststoffanteil des Beschichtungsmittels eines verzweigten Polymers enthält, das ein Gewichtsmittel des Molekulargewichts von 2000 bis 200000 g besitzt und aus
(a) einem polymeren Basismolekül, sowie
(b) über Si-C-Bindungen und gegebenenfalls einen Spacer kovalent an das Basismolekül gebundenen Polydiorganosiloxanseitenketten, die ein Gewichtsmittel des Molekulargewichts zwischen 1000 und 30000 g aufweisen und deren Anteil am Gesamtgewicht des Copolymers 5 bis 25 Gew.-% beträgt,
besteht,
zur Verpackung von Chemikalien und Lebensmitteln ausgenommen mineralischen und pflanzlichen Ölen.

2. Verwendung von Verpackungsmaterialien enthaltend mindestens eine polymere Formmasse mit anti-adhäsiven Eigenschaften, welche als Additiv 0,1 bis 10 Gew.-% bezogen auf das Gesamtgewicht der polymeren Formmasse des in Anspruch 1 genannten verzweigten Polymers enthält, zur Verpackung von Chemikalien und Lebensmitteln ausgenommen mineralischen und pflanzlichen Ölen.

3. Verwendung von Verpackungsmaterialien nach Anspruch 1 oder 2 zur Verpackung von lipophilen Chemikalien oder Feinchemikalien.

4. Verwendung von Verpackungsmaterialien nach einem oder mehreren der Ansprüche 1 bis 3 zur Verpackung von Feinchemikalien ausgewählt aus der Gruppe bestehend aus Vitaminen, Fettsäuren, Riech-, Geschmack- und Aromastoffen, Farbstoffen, Pharmachemikalien, Agrochemikalien, Kosmetikchemikalien sowie Vor- und Zwischenprodukte, Formulierungen und Zubereitungen derselben.

5. Verwendung von Verpackungsmaterialien nach einem oder mehreren der Ansprüche 1 bis 4 zur Verpackung von Lebensmitteln ausgewählt aus der Gruppe bestehend aus Milchprodukten, Fertigspeisen oder -suppen, Honig, Sirup, Fruchtsäften, Saftkonzentraten sowie in Öl eingelegten Speisen.

6. Verwendung von Verpackungsmaterialien nach einem oder mehreren der Ansprüche 1 bis 5, **dadurch gekennzeichnet, dass** die Polydiorganosiloxanseitenketten über eine Struktur ausgewählt aus den Strukturen 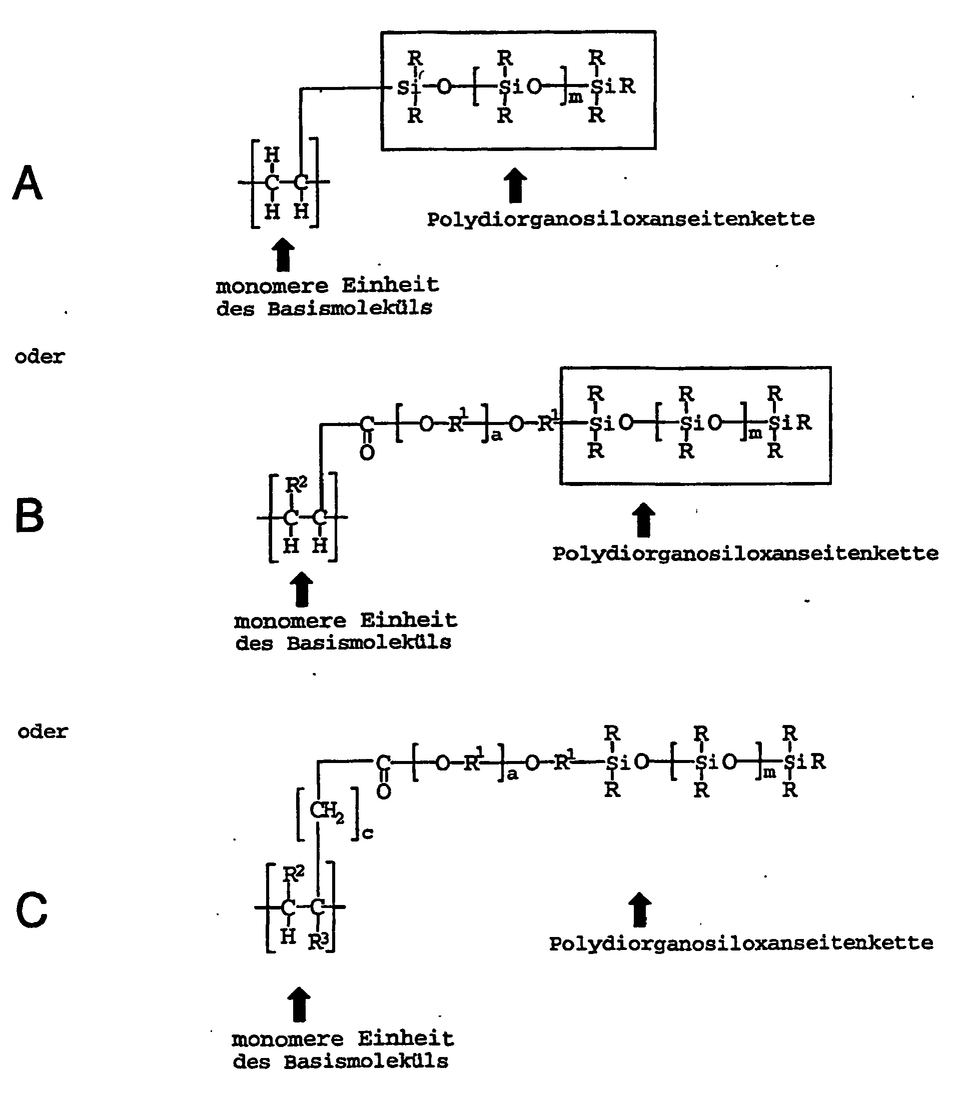 in denen
die Reste R einem geradkettigen Alkylrest mit 1 bis 8 C-Atomen oder einem Perfluoralkylrest mit 3 bis 10 C-Atomen entsprechen, wobei die Reste R innerhalb einer Polydiorganosiloxanseitenkette gleich oder verschieden sein können,
die Reste R1 einem geradkettigen oder verzweigten Alkylenrest mit 2 bis 8 C-Atomen entsprechen,
der Rest R2 einem Wasserstoffatom oder einem Rest -COOR' entspricht, wobei der Rest R' ein Wasserstoffatom oder einen gesättigten oder ungesättigten, geradkettigen, verzweigten oder cycloaliphatischen Alkylrest mit 1 bis 22 C-Atomen darstellt,
der Rest R3, wenn c gleich 1 ist, einem Rest -COOR' entspricht und, wenn c gleich 0 ist, einem Rest -(CH2)-COOR' oder einer Methylgruppe entspricht, wobei der Rest R' wie zuvor definiert ist,
der Koeffizient a einen Wert von 0 bis 10 annehmen kann, und in denen
m so gewählt ist, dass das Molekulargewicht der Polydiorganosiloxanseitenketten zwischen 1000 und 30000 g liegt,
an das Basismolekül gebunden sind.

7. Verwendung von Verpackungsmaterialien nach einem oder mehreren der Ansprüche 1 bis 6, wobei die Polydiorganosiloxanseitenketten in Form eines Monoisocyanatadduktes an das polymere Basismolekül gebunden sind.

8. Verwendung von Verpackungsmaterialien nach einem oder mehreren der Ansprüche 1 bis 7, wobei das Basismolekül als Polymer aus radikalischer Polymerisation aus monomeren Einheiten besteht, die ausgewählt sind aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Polyethylenglykolmonoacrylaten oder Polyethylenglykolmethacrylaten mit 5 bis 80 C-Atomen, Hydroxyalkylacrylaten und Hydroxyalkylmethacrylaten von geradkettigen, verzweigten oder cycloaliphatischen Diolen mit 2 bis 36 C-Atomen, Epoxyalkylacrylaten und Epoxyalkylmethacrylaten von geradkettigen, verzweigten oder cycloaliphatischen Hydroxyepoxiden mit 3 bis 6 C-Atomen, Acrylsäureamiden und Methacrylsäureamiden von geradkettigen, verzweigten oder cycloaliphatischen Aminen mit 1 bis 22 C-Atomen, Aminoalkylacrylaten und Aminoalkylmethacrylaten von geradkettigen, verzweigten oder cycloaliphatischen Aminoalkoholen mit 2 bis 8 C-Atomen, Maleinsäureestern, Itaconsäureestern und Fumarsäureestern von geradkettigen, verzweigten oder cycloaliphatischen Alkoholen mit 1 bis 22 C-Atomen, Perfluoralkylacrylaten und Perfluoralkylmethacrylaten mit 6 bis 20 C-Atomen, Vinylestern, Vinylethern und Vinylketonen mit 3 bis 20 C-Atomen, Vinyltrialkoxysilanen mit 5 bis 8 C-Atomen, Methacryloxypropyltrialkoxysilanen mit 10 bis 16 C-Atomen, sowie Caprolacton und/oder Valerolacton-modifizierten Hydroxyalkylacrylaten und Caprolacton und/oder Valerolacton-modifizierten Hydroxyalkylmethacrylaten mit einem mittleren Molekulargewicht von 220 bis 1200 g, wobei die Hydroxyalkylacrylate und die Hydroxyalkylmethacrylate bevorzugt von geradkettigen, verzweigten oder cycloaliphatischen Diolen mit 2 bis 8 C-Atomen abgeleitet sind.

9. Verwendung von Verpackungsmaterialien nach einem oder mehreren der Ansprüche 1 bis 8, wobei das Basismolekül durch radikalischer Polymerisation aus monomeren Einheiten gebildet wird, die ausgewählt sind aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexylacrylat, 2-Ethylhexylmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Glycidoxipropylacrylat, Glycidoxipropylmethacrylat, Vinyltriethoxysilan, Methacryloxypropyltrimethoxysilan, Isocyanatomethylmethacrylat, Isopropenylcumylisocyanat, Styrol, α-Methylstyrol, Acrylnitril, Triethylenglycolmonoacrylat, Triethylenglycolmonomethacrylat, Ethylvinylether, Butylvinylether, Cyclohexylvinylether, Vinylacetat, N,N-Dimethylaminoethylacrylat, N,N-Dimethylaminoethylmethacrylat, N,N-Dimethylaminopropylacrylat, N,N-Dimethylaminopropylmethacrylat, Polyethylenglykolmonoacrylat, Polyethylenglykolmonomethacrylat, sowie Caprolacton und/oder Valerolacton-modifiziertem Hydroxyethylacrylat und Caprolacton und/oder Valerolacton-modifiziertem Hydroxyethylmethacrylat mit einem mittleren Molekulargewicht zwischen 220 und 1200 g.

10. Verwendung nach einem oder mehreren der Ansprüche 1 bis 9, wobei der Anteil der Polydiorganosiloxanseitenketten am Gesamtgewicht des verzweigten Polymers 5 bis 20 Gew.-% beträgt.

11. Verwendung von Verpackungsmaterialien nach einem oder mehreren der Ansprüche 1 bis 10, wobei der Anteil der Polydiorganosiloxanseitenketten am Gesamtgewicht des verzweigten Polymers 7,5 bis 12,5 Gew.-% beträgt.

12. Verwendung von Verpackungsmaterialien nach einem oder mehreren der Ansprüche 1 bis 11, wobei im polymeren Basismolekül vorhandene funktionelle Hydroxylgruppen verestert sind mit einer Verbindung ausgewählt aus der Gruppe bestehend aus Maleinsäureanhydrid, Bernsteinsäureanhydrid, Phthalsäureanhydrid, Trimellitsäureanhydrid, Acrylsäure und Methacrylsäure.

13. Verwendung von Verpackungsmaterialien nach einem oder mehreren der Ansprüche 1 bis 12, wobei das verzweigte Polymer ein Gewichtsmittel des Molekulargewichtes von 5000 bis 75000 g besitzt.

14. Verwendung von Verpackungsmaterialien nach einem oder mehreren der Ansprüche 1 bis 13, wobei die Beschichtungsmittel bzw. polymeren Formmassen das verzweigte Polymer als Additiv in einer Menge von 0,5 bis 5 Gew.-% bezogen auf den Feststoffanteil der Beschichtungsmittel bzw. der polymeren Formmassen enthalten.

15. Verwendung von Verpackungsmaterialien nach einem oder mehreren der Ansprüche 1 bis 14, wobei es sich bei der polymeren Formmassen um Lackharze, Alkydharze, Polyesterharze, Epoxidharze, Polyurethanharze, ungesättigte Polyesterharze, Vinylesterharze, Polyethylen, Polypropylen, Polyamide, Polyethylentherephthalat, Polystyrol, Polyacrylnitril, Polybutadien, Polyvinylchlorid oder Mischungen aus diesen Polymeren handelt.

16. Verwendung von Verpackungsmaterialien nach einem oder mehreren der Ansprüche 1 bis 14, wobei das Beschichtungsmittel ein Bindemittel umfasst ausgewählt aus der Gruppe bestehend aus Vinylesterharzen, Polyethylen, Polyamiden, Polyacrylnitril, Chlorkautschuk, Alkydharzen, Polyesterharzen, Polyurethanharzen, ungesättigte Polyesterharzen, Polyester/Polyisocyanat-Kombinationen, Polyesteracrylaten, Acrylharze, Celluloseacetat, Celluloseacetobutyrat, Celluloseacetopropionat, Cellulosenitrat, Chlorsulfoniertes Polyethylen, Epoxidharze, Epoxidharzester, Epoxidharz-Teer-Kombinationen, Ethylen-Vinylacetat-Polymere, Melamin-Formaldehyd-Harze, Chloriertes Polyethylen, Phenol-Formaldehyd-Harze, Polymethylmethacrylat, Polypropylen, Polystyrol, Polytetrafluorethylen, Polyurethane, Polyurethan-Teer-Kombinationen, Polyvinylacetat, Polyvinylbutyral, Polyvinylchlorid, Chloriertes Polyvinylchlorid, Polyvinylidenchlorid, Polyvinylidenfluorid, Polyvinylfluorid, Chlorkautschuk, Cyclokautschuk, Polystyrol, Polystyrol mit Elastomer auf Basis Butadien, Silicon-Polymere, gesättigter Polyester, Harnstoff-Formaldehyd-Harze, ungesättigte Polyester, Vinylchlorid-Vinylacetat-Polymere, Polybutadien oder Mischungen der vorgenannten.

## Claims

1. The use of packaging materials comprising at least one coating composition having antiadhesive properties which comprises as additive from 0.1 to 10% by weight, based on the solids fraction of the coating composition, of a branched polymer which possesses a weight-average molecular weight of from 2000 to 200 000 g and is composed of
(a) a polymeric base molecule and
(b) polydiorganosiloxane side chains which are attached covalently to the base molecule by way of Si-C bonds and, if appropriate, a spacer, which have a weight-average molecular weight of between 1000 and 30 000 g, and whose fraction as a proportion of the total weight of the copolymer is from 5 to 25% by weight
for packaging chemicals and foodstuffs, with the exception of mineral and vegetable oils.

2. The use of packaging materials comprising at least one polymeric molding compound having antiadhesive properties which comprises as additive from 0.1 to 10% by weight, based on the total weight of the polymeric molding compound, of the branched polymer set forth in claim 1 for packaging chemicals and foodstuffs, with the exception of mineral and vegetable oils.

3. The use of packaging materials according to claim 1 or 2 for packaging lipophilic chemicals or fine chemicals.

4. The use of packaging materials according to one or more of claims 1 to 3 for packaging fine chemicals selected from the group consisting of vitamins, fatty acids, fragrances, flavors, and aromas, colorants, pharmaceutical chemicals, agrochemicals, and cosmetic chemicals, and also their precursors, intermediates, formulations and preparations.

5. The use of packaging materials according to one or more of claims 1 to 4 for packaging foodstuffs selected from the group consisting of dairy products, pre-prepared foods or soups, honey, syrup, fruit juices, juice concentrates, and foods in oil.

6. The use of packaging materials according to one or more of claims 1 to 5, wherein the polydiorganosiloxane side chains are attached to the base molecule via a structure selected from the structures 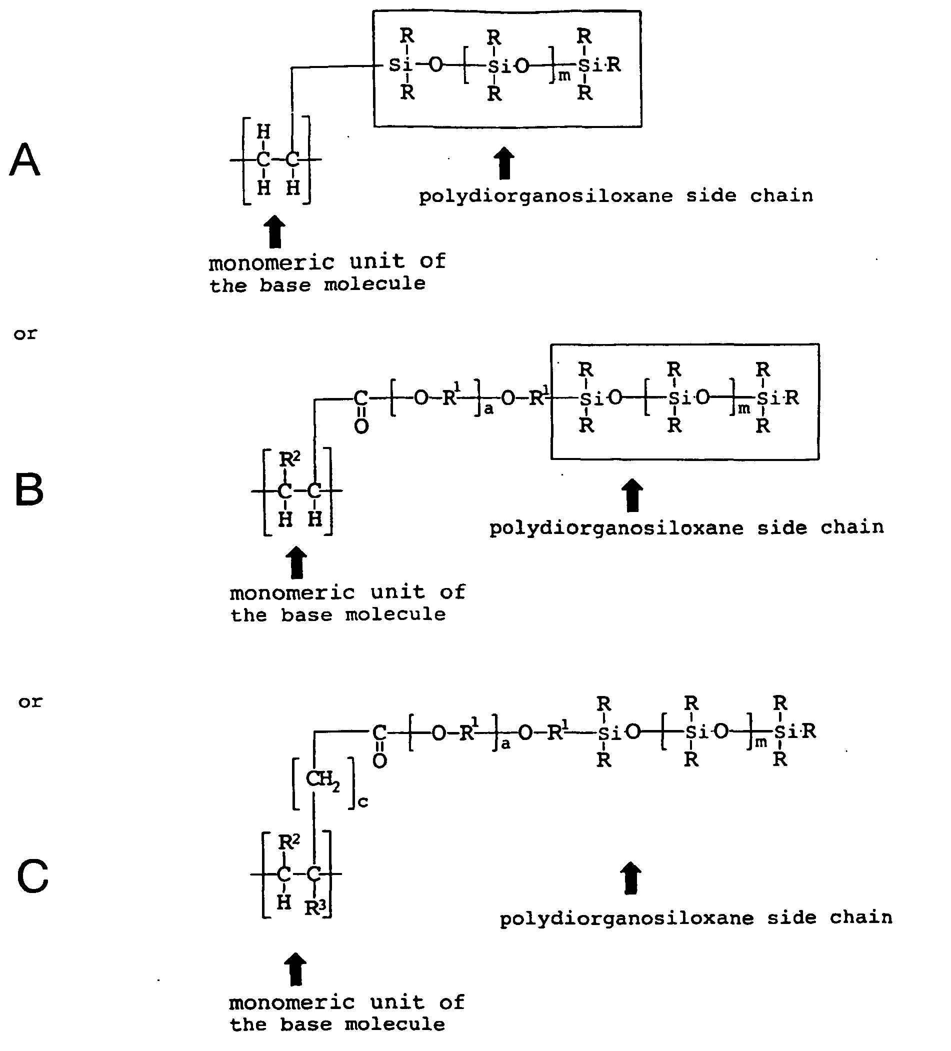
in which
the radicals R correspond to a straight-chain alkyl radical having 1 to 8 carbon atoms or a perfluoroalkyl radical having 3 to 10 carbon atoms, it being possible for the radicals R within a polydiorganosiloxane side chain to be identical or different,
the radicals R¹ correspond to a straight-chain or branched alkylene radical having 2 to 8 carbon atoms,
the radical R² corresponds to a hydrogen atom or a radical -COOR', in which the radical R' is a hydrogen atom or a saturated or unsaturated, straight-chain, branched or cycloaliphatic alkyl radical having 1 to 22 carbon atoms,
the radical R³, if c is 1, corresponds to a radical -COOR' and, if c is 0, corresponds to a radical -(CH2)-COOR' or to a methyl group, the radical R' being as defined above,
the coefficient a may adopt a value from 0 to 10, and in which
m is chosen such that the molecular weight of the polydiorganosiloxane side chains is between 1000 and 30 000 g.

7. The use of packaging materials according to one or more of claims 1 to 6, where the polydiorganosiloxane side chains are attached in the form of a monoisocyanate adduct to the polymeric base molecule.

8. The use of packaging materials according to one or more of claims 1 to 7, where the base molecule, as a polymer from free-radical addition polymerization, is composed of monomeric units selected from the group consisting of alkenes and arylalkenes having 2 to 30 carbon atoms, alkyl acrylates and alkyl methacrylates of straight-chain, branched or cycloaliphatic alcohols having 1 to 22 carbon atoms, aralkyl acrylates and aralkyl methacrylates of aralkyl alcohols having 8 to 18 carbon atoms, polyethylene glycol monoacrylates or polyethylene glycol monomethacrylates having 5 to 80 carbon atoms, hydroxyalkyl acrylates and hydroxyalkyl methacrylates of straight-chain, branched or cycloaliphatic diols having 2 to 36 carbon atoms, epoxyalkyl acrylates or epoxyalkyl methacrylates of straight-chain, branched or cycloaliphatic hydroxyepoxides having 3 to 6 carbon atoms, acrylamides and methacrylamides of straight-chain, branched or cycloaliphatic amines having 1 to 22 carbon atoms, aminoalkyl acrylates and aminoalkyl methacrylates of straight-chain, branched or cycloaliphatic amino alcohols having 2 to 8 carbon atoms, maleic esters, itaconic esters and fumaric esters of straight-chain, branched or cycloaliphatic alcohols having 1 to 22 carbon atoms, perfluoroalkyl acrylates and perfluoroalkyl methacrylates having 6 to 20 carbon atoms, vinyl esters, vinyl ethers and vinyl ketones having 3 to 20 carbon atoms, vinyltrialkoxysilanes having 5 to 8 carbon atoms, and methacryloyloxypropyltrialkoxysilanes having 10 to 16 carbon atoms, and also caprolactone and/or valerolactone-modified hydroxyalkyl acrylates and caprolactone and/or valerolactone-modified hydroxyalkyl methacrylates having an average molecular weight of from 220 to 1200 g, the hydroxyalkyl acrylates and the hydroxyalkyl methacrylates being derived preferably from straight-chain, branched or cycloaliphatic diols having 2 to 8 carbon atoms.

9. The use of packaging materials according to one or more of claims 1 to 8, where the base molecule is formed by free-radical addition polymerization from monomeric units selected from the group consisting of acrylic acid, methacrylic acid, methyl acrylate, methyl methacrylate, ethyl acrylate, ethyl methacrylate, n-butyl acrylate, n-butyl methacrylate, isobutyl acrylate, isobutyl methacrylate, t-butyl acrylate, t-butyl methacrylate, lauryl acrylate, lauryl methacrylate, 2-ethylhexyl acrylate, 2-ethylhexyl methacrylate, stearyl acrylate, stearyl methacrylate, behenyl acrylate, behenyl methacrylate, cyclohexyl acrylate, cyclohexyl methacrylate, isobornyl acrylate, isobornyl methacrylate, hydroxyethyl acrylate, hydroxyethyl methacrylate, glycidyloxypropyl acrylate, glycidyloxypropyl methacrylate, vinyltriethoxy silane, methacryloyloxypropyltrimethoxysilane, isocyanatomethyl methacrylate, isopropenylcumyl isocyanate, styrene, α-methylstyrene, acrylonitrile, triethylene glycol monoacrylate, triethylene glycol monomethacrylate, ethyl vinyl ether, butyl vinyl ether, cyclohexyl vinyl ether, vinyl acetate, N,N-dimethylaminoethyl acrylate, N,N-dimethylaminoethyl methacrylate, N,N-dimethylaminopropyl acrylate, N,N-dimethylaminopropyl methacrylate, polyethylene glycol monoacrylate, polyethylene glycol monomethacrylate, and also caprolactone and/or valerolactone-modified hydroxyethyl acrylate and caprolactone and/or valerolactone-modified hydroxyethyl methacrylate having an average molecular weight of between 220 and 1200 g.

10. The use according to one or more of claims 1 to 9, where the fraction of the polydiorganosiloxane side chains as a proportion of the total weight of the branched polymer is from 5 to 20% by weight.

11. The use of packaging materials according to one or more of claims 1 to 10, where the fraction of the polydiorganosiloxane side chains as a proportion of the total weight of the branched polymer is from 7.5 to 12.5% by weight.

12. The use of packaging materials according to one or more of claims 1 to 11, where functional hydroxyl groups present in the polymeric base molecule have been esterified with a compound selected from the group consisting of maleic anhydride, succinic anhydride, phthalic anhydride, trimellitic anhydride, acrylic acid, and methacrylic acid.

13. The use of packaging materials according to one or more of claims 1 to 12, where the branched polymer possesses a weight-average molecular weight of from 5000 to 75 000 g.

14. The use of packaging materials according to one or more of claims 1 to 13, where the coating compositions or polymeric molding compounds comprise the branched polymer as an additive in an amount of from 0.5 to 5% by weight:, based on the solids fraction of the coating compositions or of the polymeric molding compounds.

15. The use of packaging materials according to one or more of claims 1 to 14, where the polymeric molding compounds are film-forming resins, alkyd resins, polyester resins, epoxy resins, polyurethane resins, unsaturated polyester resins, vinyl ester resins, polyethylene, polypropylene, polyamides, polyethylene therephthalate, polystyrene, polyacrylonitrile, polybutadiene, polyvinyl chloride or mixtures of these polymers.

16. The use of packaging materials according to one or more of claims 1 to 14, where the coating composition comprises a binder selected from the group consisting of vinyl ester resins, polyethylene, polyamides, polyacrylonitrile, chlorinated rubber, alkyd resins, polyester resins, polyurethane resins, unsaturated polyester resins, polyester/polyisocyanate combinations, polyester acrylates, acrylic resins, cellulose acetate, cellulose acetobutyrate, cellulose acetopropionate, cellulose nitrate, chlorosulfonated polyethylene, epoxy resins, epoxy resin esters, epoxy resin/tar combinations, ethylene-vinyl acetate polymers, melamine-formaldehyde resins, chlorinated polyethylene, phenol-formaldehyde resins, polymethyl methacrylate, polypropylene, polystyrene, polytetrafluoroethylene, polyurethanes, polyurethane/tar combinations, polyvinyl acetate, polyvinyl butyral, polyvinyl chloride, chlorinated polyvinyl chloride, polyvinylidene chloride, polyvinylidene fluoride, polyvinyl fluoride, chlorinated rubber, cyclo rubber, polystyrene, polystyrene with butadiene-based elastomer, silicone polymers, saturated polyester, urea-formaldehyde resins, unsaturated polyesters, vinyl chloride-vinyl acetate polymers, polybutadiene or mixtures of the aforementioned.

## Revendications

1. Utilisation de matériaux d'emballage contenant au moins un agent d'enduction à propriétés antiadhésives, qui, comme additif, contient 0,1 à 10 % en poids, par rapport à la fraction de matière solide de l'agent d'enduction, d'un polymère ramifié qui possède une moyenne pondérale du poids moléculaire de 2000 à 20.000 g et qui est constitué
(a) d'une molécule de base polymère, ainsi que
(b) de chaînes latérales de polydiorganosiloxane qui sont liées de manière covalente à la molécule de base par l'intermédiaire de liaisons Si-C et éventuellement d'un espaceur, qui présentent une moyenne pondérale du poids moléculaire entre 1000 et 30.000 g et dont la fraction par rapport au poids global du copolymère est de 5 à 25 % en poids,
pour l'emballage de produits chimiques et alimentaires à l'exclusion des huiles minérales et végétales.

2. Utilisation de matériaux d'emballage contenant au moins une masse de moulage polymère à propriétés antiadhésives qui, comme additif, contient 0,1 à 10 % en poids, par rapport au poids total de la masse de moulage polymère, du polymère ramifié cité dans la revendication 1, pour l'emballage de produits chimiques et alimentaires à l'exclusion des huiles minérales et végétales.

3. Utilisation de matériaux d'emballage suivant la revendication 1 ou 2, pour l'emballage de produits chimiques lipophiles ou de produits chimiques fins.

4. Utilisation de matériaux d'emballage suivant une ou plusieurs des revendications 1 à 3, pour l'emballage de produits chimiques fins choisis parmi le groupe constitué des vitamines, des acides gras, des substances odorantes, sapides et aromatiques, des colorants, des produits pharmacochimiques, des produits agrochimiques, des produits chimico-cosmétiques ainsi qu'avant-produits et produits intermédiaires, formulations et compositions de ceux-ci.

5. Utilisation de matériaux d'emballage suivant une ou plusieurs des revendications 1 à 4, pour l'emballage d'aliments choisis parmi le groupe constitué des produits laitiers, des plats ou soupes préparés, du miel, du sirop, des jus de fruits, des concentrés de jus ainsi que des plats marinés dans l'huile.

6. Utilisation de matériaux d'emballage suivant une ou plusieurs des revendications 1 à 5, **caractérisée en ce que** les chaînes latérales de polydiorganosiloxane sont liées à la molécule de base par l'intermédiaire d'une structure choisie parmi les structures : 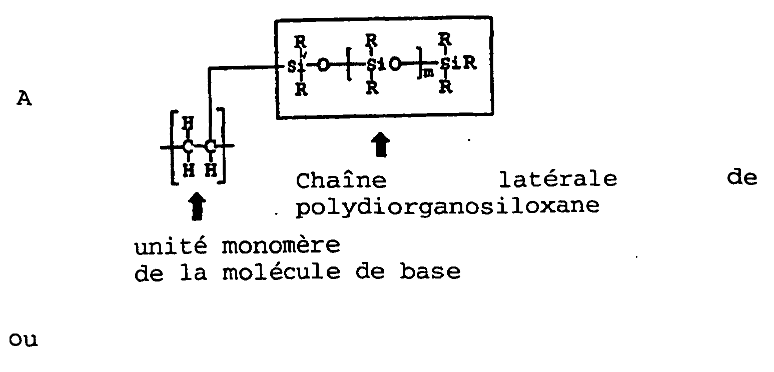 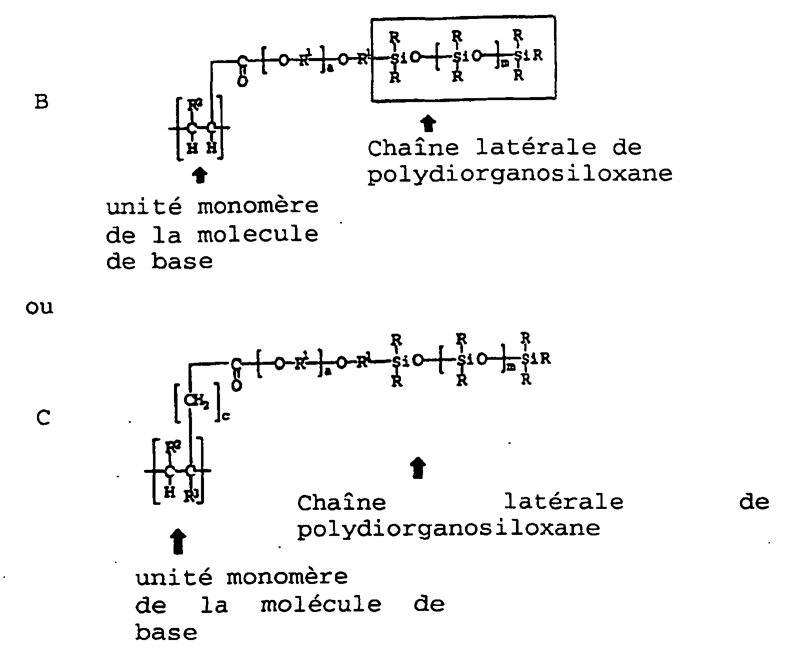
dans lesquelles
les radicaux R correspondent à un radical alkyle linéaire comportant 1 à 8 atomes de C ou à un radical perfluoroalkyle comportant 3 à 10 atomes de C, les radicaux R pouvant être identiques ou différents à l'intérieur d'une chaîne latérale de polydiorganosiloxane,
les radicaux R¹ correspondent à un radical alkylène linéaire ou ramifié comportant 2 à 8 atomes de C,
le radical R² correspond à un atome d'hydrogène ou à un radical -COOR', où le radical R' représente un atome d'hydrogène ou un radical alkyle saturé ou insaturé, linéaire, ramifié ou cycloaliphatique, comportant 1 à 22 atomes de C,
le radical R³ correspond à un radical -COOR' lorsque c est égal à 1 et à un radical -(CH₂)-COOR' ou à un groupe méthyle lorsque c est égal à 0, le radical R' étant tel que défini précédemment,
le coefficient a peut adopter une valeur de 0 à 10, et
m est choisi de façon que le poids moléculaire des chaînes latérales de polydiorganosiloxane se trouve entre 1000 et 30.000 g.

7. Utilisation de matériaux d'emballage suivant une ou plusieurs des revendications 1 à 6, dans laquelle les chaînes latérales de polydiorganosiloxane sont liées à la molécule de base polymère sous la forme d'un produit d'addition de monoisocyanate.

8. Utilisation de matériaux d'emballage suivant une ou plusieurs des revendications 1 à 7, dans laquelle la molécule de base est, en tant que polymère issu d'une polymérisation radicalaire, constituée d'unités monomères qui sont choisies parmi le groupe constitué d'alcènes et d'arylalcènes comportant 2 à 30 atomes de C, d'acrylates d'alkyle et de méthacrylates d'alkyle d'alcools linéaires, ramifiés ou cycloaliphatiques comportant 1 à 22 atomes de C, d'acrylates d'aralkyle et de méthacrylates d'aralkyle d'alcools aralkyliques comportant 8 à 18 atomes de C, de monoacrylates de polyéthylèneglycol ou de méthacrylates de polyéthylèneglycol comportant 5 à 80 atomes de C, d'acrylates d'hydroxyalkyle et de méthacrylates d'hydroxyalkyle de diols linéaires, ramifiés ou cycloaliphatiques comportant 2 à 36 atomes de C, d'acrylates d'époxyalkyle et de méthacrylates d'époxyalkyle d'hydroxyépoxydes linéaires, ramifiés ou cycloaliphatiques comportant 3 à 6 atomes de C, d'amides d'acide acrylique et d'amides d'acide méthacrylique d'amines linéaires, ramifiées ou cycloaliphatiques comportant 1 à 22 atomes de C, d'acrylates d'aminoalkyle et de méthacrylates d'aminoalkyle d'aminoalcools linéaires, ramifiés ou cycloaliphatiques comportant 2 à 8 atomes de C, d'esters d'acide maléique, d'acide itaconique et d'acide fumarique, des alcools linéaires, ramifiés ou cycloaliphatiques comportant 1 à 22 atomes de C, d'acrylates de perfluoroalkyle et de méthacrylates de perfluoroalkyle comportant 6 à 20 atomes de C, d'esters vinyliques, d'éthers vinyliques et de cétones vinyliques comportant 3 à 20 atomes de C, de vinyltrialcoxysilanes comportant 5 à 8 atomes de C, de méthacryloxypropyltrialcoxysilanes comportant 10 à 16 atomes de C, ainsi que d'acrylates d'hydroxyalkyle modifiés par de la caprolactone et/ou de la valérolactone et de méthacrylates d'hydroxyalkyle modifiés par de la caprolactone et/ou de la valérolactone présentant un poids moléculaire moyen de 220 à 1200 g, les acrylates d'hydroxyalkyle et les méthacrylates d'hydroxyalkyle étant de préférence dérivés de diols linéaires, ramifiés ou cycloaliphatiques comportant 2 à 8 atomes de C.

9. Utilisation de matériaux d'emballage suivant une ou plusieurs des revendications 1 à 8, dans laquelle la molécule de base est formée par polymérisation radicalaire d'unités monomères qui sont choisies parmi le groupe constitué de l'acide acrylique, de l'acide méthacrylique, de l'acrylate de méthyle, du méthacrylate de méthyle, de l'acrylate d'éthyle, du méthacrylate d'éthyle, de l'acrylate de n-butyle, du méthacrylate de n-butyle, de l'acrylate de i-butyle, du méthacrylate de i-butyle, de l'acrylate de t-butyle, du méthacrylate de t-butyle, de l'acrylate de lauryle, du méthacrylate de lauryle, de l'acrylate de 2-éthylhexyle, du méthacrylate de 2-éthylhexyle, de l'acrylate de stéaryle, du méthacrylate de stéaryle, de l'acrylate de béhényle, du méthacrylate de béhényle, de l'acrylate de cyclohexyle, du méthacrylate de cyclohexyle, de l'acrylate d'isobornyle, du méthacrylate d'isobornyle, de l'acrylate d'hydroxyéthyle, du méthacrylate d'hydroxyéthyle, de l'acrylate de glycidoxypropyle, du méthacrylate de glycidoxypropyle, du vinyltriéthoxysilane, du méthacryloxypropyltriméthoxysilane, du méthacrylate d'isocyanatométhyle, de l'isocyanate d'isopropénylcumyle, du styrène, de l'α-méthylstyrène, de l'acrylonitrile, du monoacrylate de triéthylèneglycol, du monométhacrylate de triéthylèneglycol, de l'éther éthylvinylique, de l'éther butylvinylique, de l'éther cyclohexylvinylique, de l'acétate de vinyle, de l'acrylate de N,N-diméthylaminoéthyle, du méthacrylate de N,N-diméthylaminoéthyle, de l'acrylate de N,N-diméthylaminopropyle, du méthacrylate de N,N-diméthylaminopropyle, du monoacrylate de polyéthylèneglycol, du monométhacrylate de polyéthylèneglycol, ainsi que de l'acrylate d'hydroxyéthyle modifié par de la caprolactone et/ou de la valérolactone et du méthacrylate d'hydroxyéthyle modifié par de la caprolactone et/ou de la valérolactone présentant un poids moléculaire moyen entre 220 et 1200 g.

10. Utilisation suivant une ou plusieurs des revendications 1 à 9, dans laquelle la fraction des chaînes latérales de polydiorganosiloxane par rapport au poids global du polymère ramifié est de 5 à 20 % en poids.

11. Utilisation de matériaux d'emballage suivant une ou plusieurs des revendications 1 à 10, dans laquelle la fraction des chaînes latérales de polydiorganosiloxane par rapport au poids global du polymère ramifié est de 7,5 à 12,5 % en poids.

12. Utilisation de matériaux d'emballage suivant une ou plusieurs des revendications 1 à 11, dans laquelle des groupes hydroxyle fonctionnels présents dans la molécule de base polymère sont estérifiés par un composé choisi parmi le groupe constitué de l'anhydride maléique, de l'anhydride succinique, de l'anhydride phtalique, de l'anhydride trimellique, de l'acide acrylique et de l'acide méthacrylique.

13. Utilisation de matériaux d'emballage suivant une ou plusieurs des revendications 1 à 12, dans laquelle le polymère ramifié présente une moyenne pondérale du poids moléculaire de 5000 à 75.000 g.

14. Utilisation de matériaux d'emballage suivant une ou plusieurs des revendications 1 à 13, dans laquelle l'agent d'enduction ou respectivement les masses de moulage polymères contiennent le polymère ramifié sous la forme d'un additif en une quantité de 0,5 à 5 % en poids par rapport à la fraction de matière solide de l'agent d'enduction ou respectivement des masses de moulage polymères.

15. Utilisation de matériaux d'emballage suivant une ou plusieurs des revendications 1 à 14, dans laquelle, pour ce qui concerne les masses de moulage polymères, il s'agit de résines pour vernis, de résines alkyde, de résines de polyester, de résines époxyde, de résines de polyuréthanne, de résines de polyester insaturé, de résines d'ester vinylique, de polyéthylène, de polypropylène, de polyamides, de téréphtalate de polyéthylène, de polystyrène, de polyacrylonitrile, de polybutadiène, de chlorure de polyvinyle ou de mélanges de ces polymères.

16. Utilisation de matériaux d'emballage suivant une ou plusieurs des revendications 1 à 14, dans laquelle l'agent d'enduction comporte un liant choisi parmi le groupe constitué de résines d'ester vinylique, de polyéthylène, de polyamides, de polyacrylonitrile, de caoutchouc chloré, de résines alkyde, de résines de polyester, de résines de polyuréthanne, de résines de polyester insaturé, de combinaisons de polyester/polyisocyanate, d'acrylates de polyester, de résines acryliques, d'acétate de cellulose, d'acétobutyrate de cellulose, d'acétopropionate de cellulose, de nitrate de cellulose, de polyéthylène chlorosulfoné, de résines époxyde, d'esters de résine époxyde, de combinaisons de résine époxyde-goudron, de polymères d'éthylène-acétate de vinyle, de résines de mélamine-formaldéhyde, de polyéthylène chloré, de résines de phénol-formaldéhyde, de polyméthacrylate de méthyle, de polypropylène, de polystyrène, de polytétrafluoroéthylène, de polyuréthannes, de combinaisons de polyuréthanne-goudron, d'acétate de polyvinyle, de polyvinylbutyral, de chlorure de polyvinyle, de chlorure de polyvinyle chloré, de chlorure de polyvinylidène, de fluorure de polyvinylidène, de fluorure de polyvinyle, de caoutchouc chloré, de cyclocaoutchouc, de polystyrène, de polystyrène à élastomère à base de butadiène, de polymères de silicone, de polyesters saturés, de résines d'urée-formaldéhyde, de polyester insaturé, de polymères de chlorure de vinyle-acétate de vinyle, de polybutadiène ou de mélanges des substances précitées.
